# EUROPEAN PATENT APPLICATION

(11) **EP 3 818 829 A2**
(43) Date of publication of application: **12.05.2021**
(21) Application number: 20199292.2
(22) Date of filing: 30.09.2020
(51) Int. Cl.: A01N 43/82, A01P 5/00

(54) **GRANULAR NEMATICIDE COMPOSITIONS**

(30) Priority: 16.10.2019 US 201962915772 P
(71) Applicant: Monsanto Technology LLC, St. Louis, MO 63167 (US)
(72) Inventor: PRZYBYLA, David, O Fallon, MO 63368 (US); LIU, Limin, Chesterfield, MO 63017 (US)
(74) Representative: BIP Patents

(57) **Abstract**

Various granular agrochemical compositions comprising an agrochemical component comprising a 3,5-disubstituted-1,2,4-oxadiazole or a salt thereof and a particulate carrier, and at least about 2 % wt water.

## Description

### FIELD

Provided herein are granular agrochemical compositions comprising an agrochemical component comprising a 3,5-disubstituted-1,2,4-oxadiazole or a salt thereof, in particular tioxazafen, and a particulate carrier, and at least 2% wt water.

### BACKGROUND

Nematodes are active, flexible, elongate organisms that live on moist surfaces or in liquid environments, including films of water within soil and moist tissues within other organisms. Many species of nematodes have evolved to be very successful parasites of plants and animals and, as a result, are responsible for significant economic losses in agriculture and livestock.

Plant parasitic nematodes can infest all parts of the plant, including the roots, developing flower buds, leaves, and stems. Plant parasites can be classified on the basis of their feeding habits into a few broad categories: migratory ectoparasites, migratory endoparasites, and sedentary endoparasites. Sedentary endoparasites, which include root knot nematodes (*Meloidogyne*) and cyst nematodes (*Globodera* and *Heterodera*), can establish long-term infections within roots that may be very damaging to crops.

The 3,5-disubstituted-1,2,4-oxadiazoles described in U.S. Pat. No. 8,435,999 and U.S. Pat. No. 8,017,555 are known as agrochemical components with nematicidal activity. There remains a need for a stable, effective, and economical agrochemical compositions for these agrochemical compounds, in particular for applications in soil as in particular nematodes of high economic importance are soil-borne pests. Granular agrochemical formulations provide several advantages as they are ready and safe to use due to little drift hazard and as there is no need to spray, simple to apply and may release the active ingredient slowly into the soil depending on the composition of the granular agrochemical formulation. Therefore, there is a need for granular agrochemical compositions that are convenient to transport and store, do not crystalize upon prolonged storage, and exhibit acceptable nematicide release and efficacy when applied.

### BRIEF SUMMARY

In various aspects, granular agrochemical compositions described herein comprise an agrochemical component comprising a 3,5-disubstituted-1,2,4-oxadiazole or a salt thereof, in particular tioxazafen, a particulate carrier; and water, wherein the water content of the composition is from about 2 wt.% to about 25 wt.%.

In further aspects, various granular agrochemical compositions described herein comprise an agrochemical component comprising a 3,5-disubstituted-1,2,4-oxadiazole or a salt thereof, in particular tioxazafen, and a particulate carrier comprising a magnesium-aluminum silicate clay material.

Other aspects described herein include methods for protecting the roots of a plant against damage by a nematode. These methods comprise applying the agrochemical composition as described herein or an application mixture thereof to soil of a growing area.

Still further aspects include, processes of preparing the granular agrochemical compositions described herein. Various processes comprise mixing a precursor composition comprising the agrochemical component comprising the 3,5-disubstituted-1,2,4-oxadiazole or a salt thereof, in particular tioxazafen, with the particulate carrier to form the agrochemical composition.

Other objects and features will be in part apparent and in part pointed out hereinafter.

### DETAILED DESCRIPTION

Various granular agrochemical compositions (e.g., nematicidal compositions), processes of preparing these compositions, and methods of using these compositions are described herein. For example, various granular agrochemical compositions (i.e., granular agrochemical compositions) comprise an agrochemical component comprising a 3,5-disubstituted-1,2,4-oxadiazole or a salt thereof, in particular tioxazafen, a particulate carrier, and at least 2 % wt water. In some embodiments, the granular agrochemical compositions comprise an agrochemical component comprising a 3,5-disubstituted-1,2,4-oxadiazole or a salt thereof, in particular tioxazafen, a particulate carrier; and a surfactant.

Also provided herein are methods of protecting the roots of a plant against damage by a nematode. The methods comprise applying the agrochemical composition or an application mixture thereof to soil of a growing area or an area where crops will be planted or seeded (e.g., the root zone of a plant).

The granular agrochemical compositions provided herein can comprise an agrochemical component comprising a 3,5-disubstituted-1,2,4-oxadiazole or a salt thereof, in particular tioxazafen. Various 3,5 disubstituted 1,2,4-oxadiazole suitable for the compositions are described in more detail in the following sections.

The concentration of the 3,5-disubstituted-1,2,4-oxadiazole or a salt thereof can be at least about 1 wt.%, at least about 2 wt.%, at least about 3 wt.%, at least about 4 wt.%, or at least about 5 wt.%. For example, the concentration of the 3,5-disubstituted-1,2,4-oxadiazole or a salt thereof can be from about 1 wt.% to about 10 wt.%, from about 1 wt.% to about 8 wt.%, from about 1 wt.% to about 6 wt.%, from about 1 wt.% to about 5 wt.%, from about 2 wt.% to about 10 wt.%, from about 2 wt.% to about 8 wt.%, from about 2 wt.% to about 6 wt.%, or from about 2 wt.% to about 5 wt.%. In one embodiment the concentration of the 3,5-disubstituted-1,2,4-oxadiazole or a salt thereof can be at least 1 wt.%, at least 2 wt.%, at least 3 wt.%, at least 4 wt.%, or at least 5 wt.%. For example, the concentration of the 3,5-disubstituted-1,2,4-oxadiazole or a salt thereof can be from 1 wt.% to 10 wt.%, from 1 wt.% to 8 wt.%, from 1 wt.% to 6 wt.%, from 1 wt.% to 5 wt.%, from 2 wt.% to 10 wt.%, from 2 wt.% to 8 wt.%, from 2 wt.% to 6 wt.%, or from 2 wt.% to 5 wt.%. In one embodiment the concentration of the compound according to Formula Ia-i being 3-phenyl-5-(thiophen-2-yl)-1,2,4-oxadiazole (tioxazafen) or a salt thereof can be at least 1 wt.%, at least 2 wt.%, at least 3 wt.%, at least 4 wt.%, or at least 5 wt.%. For example, the concentration of 3-phenyl-5-(thiophen-2-yl)-1,2,4-oxadiazole (tioxazafen) or a salt thereof can be from 1 wt.% to 10 wt.%, from 1 wt.% to 8 wt.%, from 1 wt.% to 6 wt.%, from 1 wt.% to 5 wt.%, from 2 wt.% to 10 wt.%, from 2 wt.% to 8 wt.%, from 2 wt.% to 6 wt.%, or from 2 wt.% to 5 wt.%.

The granular agrochemical compositions provided herein also comprise a particulate carrier. In general, the agrochemical compositions described herein are granular agrochemical compositions (e.g., solid particulate compositions). Thus, typically the particulate carrier constitutes a significant portion of these compositions. In various embodiments, the particulate carrier constitutes at least about 50 wt.%, at least about 60 wt.%, at least about 70 wt.%, at least about 80 wt.%, or at least about 90 wt.% of the composition. For example, the particulate carrier can constitute from about 50 wt.% to about 98 wt.%, from about 50 wt.% to about 95 wt.%, from about 50 wt.% to about 92 wt.%, from about 50 wt.% to about 90 wt.%, from about 60 wt.% to about 98 wt.%, from about 60 wt.% to about 95 wt.%, from about 60 wt.% to about 92 wt.%, from about 60 wt.% to about 90 wt.%, from about 70 wt.% to about 98 wt.%, from about 70 wt.% to about 95 wt.%, from about 70 wt.% to about 92 wt.%, from about 70 wt.% to about 90 wt.%, from about 80 wt.% to about 98 wt.%, from about 80 wt.% to about 95 wt.%, from about 80 wt.% to about 92 wt.%, or from about 80 wt.% to about 90 wt.% of the composition. In one embodiment, the particulate carrier can constitute the particulate carrier can constitute from 50 wt.% to 98 wt.%, from 50 wt.% to 95 wt.%, from 50 wt.% to 92 wt.%, from 50 wt.% to 90 wt.%, from 60 wt.% to 98 wt.%, from 60 wt.% to 95 wt.%, from 60 wt.% to 92 wt.%, from 60 wt.% to 90 wt.%, from 70 wt.% to 98 wt.%, from 70 wt.% to 95 wt.%, from 70 wt.% to 92 wt.%, from 70 wt.% to 90 wt.%, from 80 wt.% to 98 wt.%, from 80 wt.% to 95 wt.%, from 80 wt.% to 92 wt.%, or from 80 wt.% to 90 wt.% of the composition.

In various embodiments, the particulate carrier comprises at least one material selected from the group consisting of organic carrier, clay materials, crushed or fractionated rock, and fumed and precipitated silica and combinations thereof. The carrier provides a matrix to which the 3,5-disubstituted-1,2,4-oxadiazole or a salt thereof, in particular tioxazafen, may bind, adhere, absorb or be coated to and when applied to the soil the 3,5-disubstituted-1,2,4-oxadiazole or a salt thereof, in particular tioxazafen, is released from into the soil. In one embodiment the crushed or fractionated rock is selected from the group consisting of calcite, marble, pumice, diatomaceous earth, chalk, and quartz. In one embodiment the organic carrier is selected from the group consisting of sawdust, paper, coconut shells, corn cob particles, such as corn cob grits and tobacco stalks. In one embodiment the clay materials are selected from the group of magnesium-aluminum silicate clay materials consisting of bentonite, dolomite, sepeolite, attapulgite, laponite, hectorite. halloysite (Al₂Si₂O₅(OH)₄), kaolinite or kaoline (Al₂Si₂O₅(OH)₄), illite (K,H₃O)(Al,Mg,Fe)₂(Si,Al)₄O₁₀[(OH)₂,(H₂O)]), montmorillonite ((Na,Ca)_{0.33}(Al,Mg)₂Si₄O₁₀(OH)₂·*n*H₂O), vermiculite ((MgFe,Al)₃(Al,Si)₄O₁₀(OH)₂·4H₂O), talc (Mg₃Si₄O₁₀(OH)₂), sepiolite (Mg₄Si₆O₁₅(OH)₂·6H₂O), palygorskite (or attapulgite) ((Mg,Al)₂Si₄O₁₀(OH)·4(H₂O)), and pyrophyllite (Al₂Si₄O₁₀(OH)₂). Examples are Veegum® R, Van Gel® B, Bentone® CT, HC, EW, Pangel® M range, S9, AD, HV, W, Attagel® 50, Laponite® RD. In the table below exemplified tradenames as well as CAS-Nos. are discloses for the particulate carrier.

| **Tradename or name** | | **Company** | **General description** | CAS **No.** |
|---|---|---|---|---|
| Aerosil® 200 | | Evonik | Hydrophilic fumed silica | 112945-52-5 7631-86-9 |
| Aerosil® R972 | | Evonik | Hydrophobic fumed silica | 112945-52-5 7631-86-9 |
| Aerosil® R974 | | Evonik | Hydrophobic fumed silica | 112945-52-5 7631-86-9 |
| Agro-Sorb 30/60 RVM | | BASF | Bentonite Clay (Aluminium silicate) | |
| Attagel® 50 | | BASF | Attapulgite clay, Palygorskite ([Mg(Al 0.5-1 Fe 0-0.5 )]Si 4 (OH)O 10 x 4 H20 | 12174-11-7 |
| DG Lite® | | The Andersons | Dolomite, molasses, calcium, sodium and/or ammonium lignosulfate, wood flour | 471-43-1 |
| Laponite® RDS / RD | | Laporte | Laponite, Silicic acid, lithium magnesium sodium salt | 53320-86-8 |
| Veegum® R | | Vanberbilt | Montmorillonite, smectite clay | 12199-37-0 |
| Van Gel® B | | Vanberbilt | Montmorillonite, smectite clay | 12199-37-0 |
| Bentone® CT | | Elementis | Hectorite ((Mg2.67Li0.33)Si4Na0.33[F0. 5-1(OH)0-0.5]2O10) | 12173-47-6 |
| Bentone® HC | | Elementis | Hectorite (refined) ((Mg2.67Li0.33)Si4Na0.33[F0. 5-1(OH)0-0.5]2O10) | 12173-47-6 |
| Bentone® EW | | Elementis | Hectorite (refined) ((Mg2.67Li0.33)Si4Na0.33[F0. 5-1(OH)0-0.5]2O10) | 12173-47-6 |
| Microsorb 16/30 LVM | | BASF | Attapulgite clay | 12174-11-7 |
| Microsorb 30/60 LVM | | BASF | Attapulgite clay ((Mg,Al)₅Si₈O₂₀*4H₂O) | 14808-60-7 |
| Microsorb 300 LVM | | BASF | Attapulgite clay | 14808-60-7 |
| Microsorb 300 LVM | | BASF | Attapulgite clay | 14808-60-7 |
| Pangel® S9 | | Tolsa | Sepeolite clay (dimagnesium;dihydroxy(oxo )silane; hydrate) | 12639-43-9 |
| Pangel® AD | | Tolsa | Sepeolite clay (dimagnesium;dihydroxy(oxo )silane; hydrate) | 12639-43-9 |
| Pangel® HV | | Tolsa | Sepeolite clay (dimagnesium;dihydroxy(oxo )silane; hydrate) | 12639-43-9 |
| Pangel® M range | | Tolsa | Bentonite clay (Aluminium silicate) | 1302-78-9 |
| Pangel® W | | Tolsa | Organically modified Sepiolite clay | 12639-43-9 |
| Sipernat® 22 | | Evonik | Hydrophilic precipitated silica | 112945-52-5 7631-86-9 |

Suitable particulate carriers include materials that do not exhibit significant crystal growth of the agrochemical component upon storage, provide for agronomically acceptable release of the agrochemical component from the carrier, and/or provide for agronomically acceptable efficacy of the agrochemical component. It has been discovered that the selection of certain carrier materials, such as magnesium-aluminum silicate clay material, advantageously provides, at least in part, for granular agrochemical compositions that do not form a significant amount of crystals or any amount of crystals of the agrochemical component upon storage and that exhibit agronomically acceptable release and/or efficacy of the agrochemical component.

Thus, in certain embodiments, the agrochemical composition comprises an agrochemical component comprising a 3,5-disubstituted-1,2,4-oxadiazole or a salt thereof, in particular tioxazafen, and a particulate carrier comprising a magnesium-aluminum silicate clay material. In various embodiments, the magnesium-aluminum silicate clay material comprises or consists essentially of attapulgite, bentonite, or montmorillonite.

The particulate carrier can be characterized by various particle size parameters. For example, in some embodiments, the particulate carrier can have a mean particle size from about 20 microns to about 2000 microns. In certain embodiments, the particulate carrier is characterized by a particle size distribution where at least about 90 wt.% or at least about 95 wt.% of the particulate carrier has a particle size that is less than about 1 mm.

The granular agrochemical compositions described herein also comprises water. It has been surprisingly discovered that incorporating and/or retaining a relatively large amount of water in various granular agrochemical compositions described herein provides at least in part, for improved granular agrochemical compositions that do not form a significant amount of crystals or any amount of crystals of the agrochemical component upon storage and that exhibit agronomically acceptable release and/or efficacy of the agrochemical component. In one embodiment the water content is from about 2 wt.% to about 20 wt.%, from about 2.5 wt.% to about 15 wt.%, from about 5 wt.% to about 10 wt.%, from about 7.5 wt.% to about 20 wt.%, from about 7.5 wt.% to about 15 wt.%, from about 7.5 wt.% to about 10 wt.%, from about 10 wt.% to about 20 wt.%, or from about 10 wt.% to about 15 wt.%.

### Agrochemical Component

The granular agrochemical compositions described herein comprise an agrochemical component. The agrochemical component can comprise one or more 3,5-disubstituted-1,2,4-oxadiazoles.

In various embodiments, the agrochemical component comprises a 3,5-disubstituted-1,2,4-oxadiazole compound of Formula I or a salt thereof: 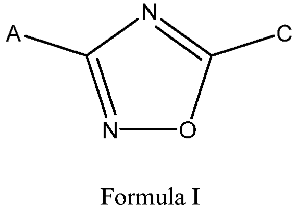 wherein A is selected from the group consisting of phenyl, pyridyl, pyrazyl, oxazolyl and isoxazolyl, each of which can be optionally independently substituted with one or more substituents selected from the group consisting of halogen, CF₃, CH₃, OCF₃, OCH₃, CN, and C(H)O; and C is selected from the group consisting of thienyl, furanyl, oxazolyl and isoxazolyl, each of which can be optionally independently substituted with one or more substituents selected from the group consisting of F, Cl, CH₃ and OCF₃.

In further embodiments, the agrochemical component comprises a 3,5-disubstituted-1,2,4-oxadiazole compound of Formula Ia or a salt thereof, 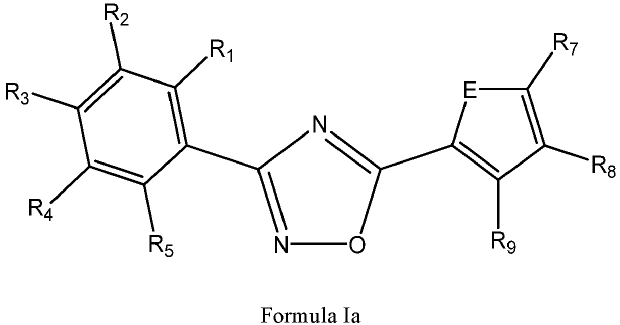 wherein R₁ and R₅ are independently selected from hydrogen, CH₃, F, Cl, Br, CF₃, OCF₃, and OCH₃; R₂ and R₄ are independently selected from hydrogen, F, Cl, Br, and CF₃; R₃ is selected from hydrogen, CH₃, CF₃, F, Cl, Br, OCF₃, OCH₃, CN, and C(H)O; R₇ and R₈ are independently selected from hydrogen and F; R₉ is selected from hydrogen, F, Cl, CH₃, and OCF₃; and E is O or S.

Compounds of Formula Ia include, for example, 3-phenyl-5-(thiophen-2-yl)-1,2,4-oxadiazole, Formula Ia-i (commonly known as tioxazafen), 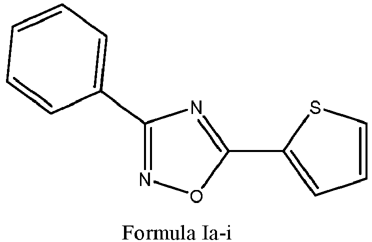 3-(4-chlorophenyl)-5-(furan-2-yl)-1,2,4-oxadiazole, Formula Ia-ii, 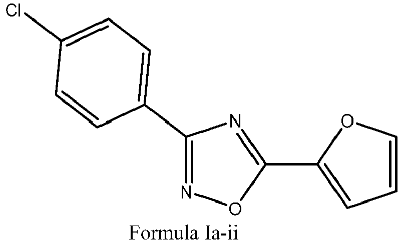 3-(4-chloro-2-methylphenyl)-5-(furan-2-yl)-1,2,4-oxadiazole, Formula Ia-iii, 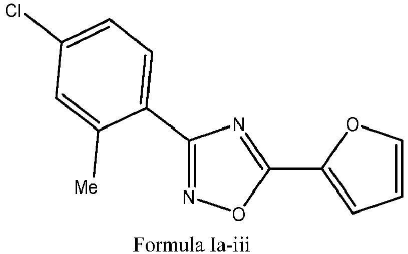 5-(furan-2-yl)-3-phenyl-1,2,4-oxadiazole, Formula Ia-iv, 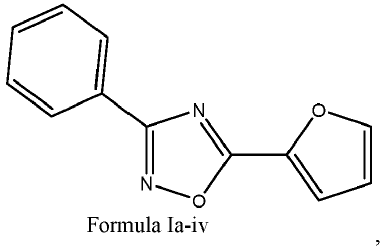 and combinations thereof.

In some embodiments, the agrochemical component comprises a 3,5-disubstituted-1,2,4-oxadiazole compound of Formula Ib or a salt thereof, 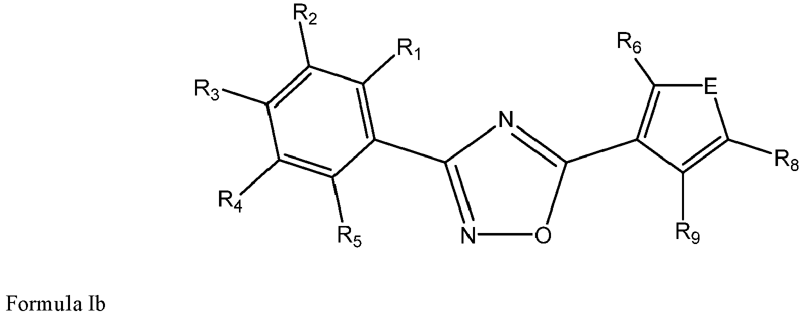 wherein R₁ and R₅ are independently selected from the group consisting of hydrogen, CH₃, F, Cl, Br, CF₃, OCF₃, and OCH₃; R₂ and R₄ are independently selected from the group consisting of hydrogen, F, Cl, Br, and CF₃; R₃ is selected from the group consisting of hydrogen, CH₃, CF₃, F, Cl, Br, OCF₃, OCH₃, CN, and C(H)O; R₈ is selected from hydrogen and F; R₆ and R₉ are independently selected from the group consisting of hydrogen, F, Cl, CH₃, and OCF₃; and E is O or S.

Compounds of Formula Ib include, for example, 3-(4-bromophenyl)-5-(furan-3-yl)-1,2,4-oxadiazole, Formula Ib-i,

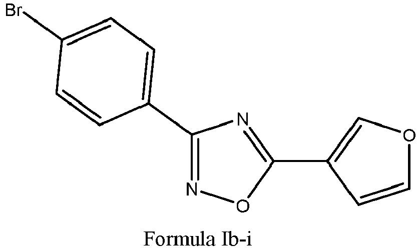

3-(2,4-difluorophenyl)-5-(thiophen-3-yl)-1,2,4-oxadiazole, Formula Ib-ii, 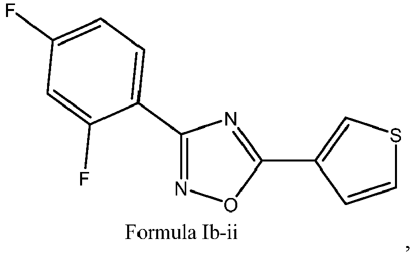 and combinations thereof.

The agrochemical component can also comprise a 3,5-disubstituted-1,2,4-oxadiazole compound of Formula II or a salt thereof, 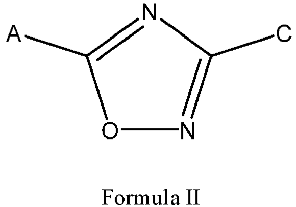 wherein A is selected from the group consisting of phenyl, pyridyl, pyrazyl, oxazolyl and isoxazolyl, each of which can be optionally independently substituted with one or more substituents selected from the group consisting of halogen, CF₃, CH₃, OCF₃, OCH₃, CN, and C(H)O; and C is selected from the group consisting of thienyl, furanyl, oxazolyl and isoxazolyl, each of which can be optionally independently substituted with one or more with substituents selected from the group consisting of F, Cl, CH₃, and OCF₃.

In various embodiments, the agrochemical component comprises a compound of Formula IIa or a salt thereof, 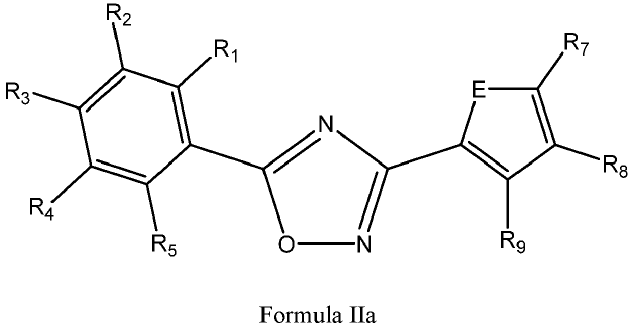 wherein R₁ and R₅ are independently selected from the group consisting of hydrogen, CH₃, F, Cl, Br, CF₃, OCF₃, and OCH₃; R₂ and R₄ are independently selected from the group consisting of hydrogen, F, Cl, Br, and CF₃; R₃ is selected from the group consisting of hydrogen, CH₃, CF₃, F, Cl, Br, OCF₃, OCH₃, CN, and C(H)O; R₇ and R₈ are independently selected from hydrogen and F; R₉ is selected from the group consisting of hydrogen, F, Cl, CH₃, and OCF₃; and E is O or S.

Compounds of Formula IIa include, for example, 3-(thiophen-2-yl)-5-(p-tolyl)-1,2,4-oxadiazole, Formula IIa-i, 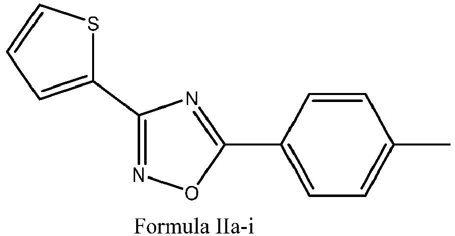 5-(3-chlorophenyl)-3-(thiophen-2-yl)-1,2,4-oxadiazole, Formula IIa-ii, 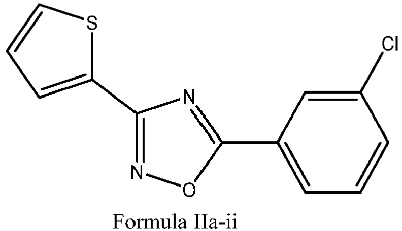 5-(4-chloro-2-methylphenyl)-3-(furan-2-yl)-1,2,4-oxadiazole, Formula IIa-iii. 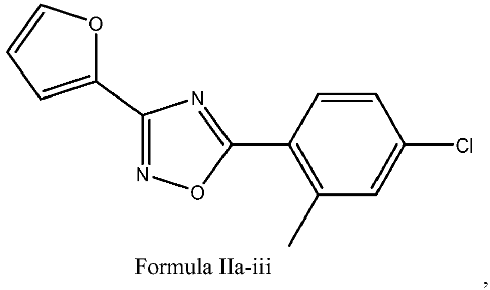 and combinations thereof.

In some embodiments, the agrochemical component comprises a compound of Formula IIb or a salt thereof, 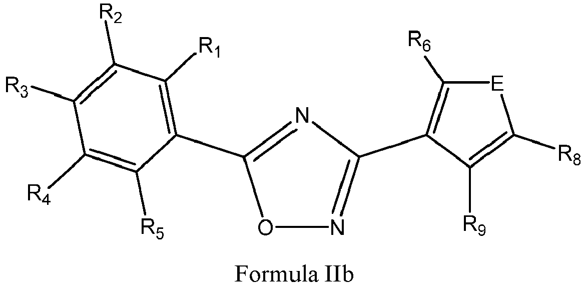 wherein R₁ and R₅ are independently selected from the group consisting of hydrogen, CH₃, F, Cl, Br, CF₃, OCF₃, and OCH₃; R₂ and R₄ are independently selected from the group consisting of hydrogen, F, Cl, Br, and CF₃; R₃ is selected from the group consisting of hydrogen, CH₃, CF₃, F, Cl, Br, OCF₃, OCH₃, CN, and C(H)O; R₈ is selected from hydrogen and F; R₆ and R₉ are independently selected from the group consisting of hydrogen, F, Cl, CH₃, and OCF₃; and E is O or S.

Salts of the 3,5-disubstituted-1,2,4-oxadiazole compounds described herein include, for example, trimethylamine salts.

The agrochemical composition can comprise any of the polymorphic forms of the agrochemical component described herein.

Generally, polymorphism refers to the potential of a chemical entity to exist in different three-dimensional arrangements in the solid state. Different polymorphic forms of a compound can have different physical properties, including: solubility and dissolution rate; crystal shape; solid state stability; batch-to-batch manufacturing reproducibility; stability; ease of formulation; and bioavailability, among others. In deciding which polymorph of a given compound is preferable for a specific application, the relevant properties of each polymorph should be determined and compared, so that the polymorph with the most desirable combination of attributes can be selected for use.

For example, it has been discovered that the agrochemical compound 3-phenyl-5-(thiophen-2-yl)-1,2,4-oxadiazole (tioxazafen), referred to herein as the compound of Formula Ia-i, exists in two distinct polymorphic forms, referred to herein as Form I and Form II. The polymorphs are enantiotropically related. The transition temperature between the two forms is believed to be approximately 102°C.

Generally, the agrochemical composition can comprise any of the polymorphic forms of the agrochemical compounds described herein. For example, in some embodiments, the agrochemical composition comprises polymorphic Form I of the compound of Formula Ia-i. In another embodiment, the agrochemical composition comprises polymorphic Form II of the compound of Formula Ia-i. Mixtures of more than one polymorph are also considered to be within the scope of the invention. For example, in some embodiments, the agrochemical composition comprises a mixture of polymorphic forms I and II of the compound of Formula Ia-i.

### Additional Agrochemical Components

The compositions described herein may be formulated or tank mixed with one or more agrochemical components and/or additional agents. The agrochemical components may be, for example, one or more pesticidal agents. Pesticidal agents include chemical pesticides and biopesticides or biocontrol agents. Various types of chemical pesticides and biopesticides include acaricides, insecticides, nematicides, fungicides, gastropodicides, herbicides, virucides, bactericides, and combinations thereof. Biopesticides or biocontrol agents may include bacteria, fungi, beneficial nematodes, and viruses that exhibit pesticidal activity. In some embodiments, the composition comprises one or more chemical acaricides, insecticides, and/or nematicides. Non-limiting examples of chemical acaricides, insecticides, and/or nematicides may include one or more carbamates, diamides, macrocyclic lactones, neonicotinoids, organophosphates, phenylpyrazoles, pyrethrins, spinosyns, synthetic pyrethroids, tetronic acids and/or tetramic acids. Non-limiting examples of chemical acaricides, insecticides and nematicides that can be useful in compositions of the present disclosure include abamectin, acrinathrin, aldicarb, aldoxycarb, alpha-cypermethrin, betacyfluthrin, bifenthrin, cyhalothrin, cypermethrin, deltamethrin, esfenvalerate, etofenprox, fenpropathrin, fenvalerate, flucythrinate, fosthiazate, lambda-cyhalothrin, gamma-cyhalothrin, permethrin, tau-fluvalinate, transfluthrin, zeta-cypermethrin, cyfluthrin, bifenthrin, tefluthrin, eflusilanat, fubfenprox,

pyrethrin, resmethrin, imidacloprid, acetamiprid, thiamethoxam, nitenpyram, thiacloprid, dinotefuran, clothianidin, chlorfluazuron, diflubenzuron, lufenuron, teflubenzuron, triflumuron, novaluron, flufenoxuron, hexaflumuron, bistrifluoron, noviflumuron, buprofezin, cyromazine, methoxyfenozide, tebufenozide, halofenozide, chromafenozide, endosulfan, fipronil, ethiprole, pyrafluprole, pyriprole, flubendiamide, chlorantraniliprole (e.g., rynaxypyr), cyazypyr (also known as cyanthraniliprole), tetraniliprole, broflanilide, cyclaniliprole, tetrachlorantraniliprole, cyhalodiamide,, emamectin, emamectin benzoate, abamectin, ivermectin, milbemectin, lepimectin, tebufenpyrad, fenpyroximate, pyridaben, fenazaquin, pyrimidifen, tolfenpyrad, dicofol, cyenopyrafen, cyflumetofen, acequinocyl, fluacrypyrin, bifenazate, diafenthiuron, etoxazole, clofentezine, spinosad, triarathen, tetradifon, propargite, hexythiazox, bromopropylate, chinomethionat, amitraz, pyrifluquinazon, pymetrozine, flonicamid, pyriproxyfen, diofenolan, chlorfenapyr, metaflumizone, indoxacarb, chlorpyrifos, spirodiclofen, spiromesifen, spirotetramat, pyridalyl, spinctoram, acephate, triazophos, profenofos, oxamyl, spinetoram, fenamiphos, fenamipclothiahos, 4-{[(6-chloropyrid-3-yl)methyl](2,2-difluoroethyl)amino}furan-2(5H)-one, cadusaphos, carbaryl, carbofuran, ethoprophos, thiodicarb, aldicarb, aldoxycarb, metamidophos, methiocarb, sulfoxaflor, methamidophos, flupyradifurone, and combinations thereof. Additional non-limiting examples of chemical acaricides, insecticides, and/or nematicides may include one or more of abamectin, aldicarb, aldoxycarb, bifenthrin, carbofuran, chlorantraniliprole, chlothianidin, cyfluthrin, cyhalothrin, cypermethrin, cyantraniliprole, dinotefuran, emamectin, ethiprole, fenamiphos, fipronil, flubendiamide, flupyradifurone, fosthiazate, imidacloprid, ivermectin, lambda-cyhalothrin, milbemectin, nitenpyram, oxamyl, permethrin, spinetoram, spinosad, spirodiclofen, spirotetramat, tefluthrin, thiacloprid, thiamethoxam, and/or thiodicarb, and combinations thereof.

In particular embodiments, the chemical acaricides, insecticides and nematicides are selected from the group consisting of abamectin, imidacloprid, acetamiprid, thiamethoxam, nitenpyram, thiacloprid, dinotefuran, clothianidin, fipronil, ethiprole, flubendiamide, chlorantraniliprole (also known as rynaxypyr), cyazypyr (also known as cyantraniliprole), tetraniliprole, broflanilide, cyclaniliprole, tetrachlorantraniliprole, cyhalodiamide, emamectin, emamectin benzoate, flupyradifurone, spirodiclofen, spiromesifen, spirotetramat, sulfoxaflor, methamidophos, and combinations thereof. Additional non-limiting examples of chemical acaricides, insecticides, and/or nematicides may include one or more of abamectin, aldicarb, aldoxycarb, bifenthrin, carbofuran, chlothianidin, cyfluthrin, cyhalothrin, cypermethrin, cyantraniliprole, and combinations thereof.

Additional non-limiting examples of acaricides, insecticides and nematicides that may be included or used in compositions in some embodiments may be found in Steffey and Gray, Managing Insect Pests, ILLINOIS AGRONOMY HANDBOOK (2008); and Niblack, Nematodes, ILLINOIS AGRONOMY HANDBOOK (2008), the contents and disclosures of which are incorporated herein by reference. Non-limiting examples of commercial insecticides which may be suitable for the compositions disclosed herein include CRUISER (Syngenta, Wilmington, Delware), GAUCHO and PONCHO (Gustafson, Plano, Texas). Active ingredients in these and other commercial insecticides may include thiamethoxam, clothianidin, and imidacloprid. Active ingredients in these and other commercial insecticides may include thiamethoxam, clothianidin, imidacloprid, flupyradifurone, sulfoxaflor, flubendiamide, chlorantraniliprole (also known as rynaxypyr), cyazypyr (also known as cyantraniliprole), tetraniliprole, broflanilide, cyclaniliprole, tetrachlorantraniliprole, cyhalodiamide. Commercial acaricides, insecticides, and/or nematicides may be used in accordance with a manufacturer's recommended amounts or concentrations.

In some embodiments, the pesticidal agent comprises one or more chemical fungicides. Non-limiting examples of chemical fungicides may include one or more aromatic hydrocarbons, benzthiadiazole, carboxylic acid amides, morpholines, phenylamides, phosphonates, thiazolidines, thiophene, quinone outside inhibitors and strobilurins, such as azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-[2-(2,5-dimethyl-phenoxymethyl)-phenyl]-3-methoxy-acrylic acid methyl ester, and 2-(2-(3-(2,6-dichlorophenyl)-1-methyl-allylideneaminooxymethyl)-phenyl)-2-methoxyimino-N-methyl-acetamide, carboxamides, such as carboxanilides (e.g., benalaxyl, benalaxyl-M, benodanil, bixafen, boscalid, carboxin, fenfuram, fenhexamid, flutolanil, fluxapyroxad, furametpyr, isopyrazam, isotianil, kiralaxyl, mepronil, metalaxyl, metalaxyl-M (mefenoxam), ofurace, oxadixyl, oxycarboxin, penflufen, penthiopyrad, pydiflumetofen, sedaxane, tecloftalam, thifluzamide, tiadinil, 2-amino-4-methyl-thiazole-5-carboxanilide, N-(4'-trifluoromethylthiobiphenyl-2-yl)-3-difluoromethyl-1-methyl-1H-pyra-zole-4-carboxamide, N-(2-(1,3,3-trimethylbutyl)-phenyl)-1,3-dimethyl-5-fluoro-1H-pyrazole-4-carboxamide), carboxylic morpholides (e.g., dimethomorph, flumorph, pyrimorph), benzoic acid amides (e.g., flumetover, fluopicolide, fluopyram, zoxamide), carpropamid, dicyclomet, mandiproamid, fenehexamid, oxytetracyclin, silthiofam, and N-(6-methoxy-pyridin-3-yl) cyclopropanecarboxylic acid amide, spiroxamine, azoles, such as triazoles (e.g., azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole) and imidazoles (e.g., cyazofamid, imazalil, pefurazoate, prochloraz, triflumizol); heterocyclic compounds, such as pyridines (e.g., fluazinam, pyrifenox (cf.D1b), 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine), pyrimidines (e.g., bupirimate, cyprodinil, diflumetorim, fenarimol, ferimzone, mepanipyrim, nitrapyrin, nuarimol, pyrimethanil), piperazines (e.g., triforine), pyrroles (e.g., fenpiclonil, fludioxonil), morpholines(e.g., aldimorph, dodemorph, dodemorph-acetate, fenpropimorph, tridemorph), piperidines (e.g., fenpropidin); dicarboximides (e.g., fluoroimid, iprodione, procymidone, vinclozolin), non-aromatic 5-membered heterocycles (e.g., famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester), acibenzolar-S-methyl, ametoctradin, amisulbrom, anilazin, blasticidin-S, captafol, captan, chinomethionat, dazomet, debacarb, diclomezine, difenzoquat, difenzoquat-methylsulfate, fenoxanil, folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-lH-benzoimidazole and 5-chloro-7-(4-methylpiperidin-1-yl)-6-(2,4,6-trifluorophenyl)-[1,2,4]triazolo-[1,5-a]pyrimidine; benzimidazoles, such as carbendazim; and other active substances, such as guanidines (e.g., guanidine, dodine, dodine free base, guazatine, guazatine-acetate, iminoctadine), iminoctadine-triacetate and iminoctadine-tris(albesilate); antibiotics (e.g., kasugamycin, kasugamycin hydrochloride-hydrate, streptomycin, polyoxine and validamycin A), nitrophenyl derivates (e.g., binapacryl, dicloran, dinobuton, dinocap, nitrothal-isopropyl, tecnazen). organometal compounds (e.g., fentin salts, such as fentin-acetate, fentin chloride, fentin hydroxide); sulfur-containing heterocyclyl compounds (e.g., dithianon, isoprothiolane), organophosphorus compounds (e.g., edifenphos, fosetyl, iprobenfos, phosphorus acid and its salts, pyrazophos, tolclofos-methyl), organochlorine compounds (e.g., chlorothalonil, dichlofluanid, dichlorophen, flusulfamide, hexachlorobenzene, pencycuron, pentachlorphenole and its salts, phthalide, quintozene, thiophanate-methyl, thiophanates, tolylfluanid, N-(4-chloro-2-nitro-phenyl)-N-ethyl-4-methyl-benzenesulfonamide) and inorganic active substances (e.g., Bordeaux mixture, copper acetate, copper hydroxide, copper oxychloride, basic copper sulfate, sulfur) and combinations thereof. In some aspects, the composition comprises acibenzolar-S-methyl, azoxystrobin, benalaxyl, bixafen, boscalid, carbendazim, cyproconazole, dimethomorph, epoxiconazole, fludioxonil, fluopyram, fluoxastrobin, flutianil, flutolanil, fluxapyroxad, fosetyl-Al, ipconazole, isopyrazam, kresoxim-methyl, mefenoxam, metalaxyl, metconazole, myclobutanil, orysastrobin, penflufen, penthiopyrad, picoxystrobin, propiconazole, prothioconazole, pyraclostrobin, pydiflumetofen, sedaxane, silthiofam, tebuconazole, thiabendazole, thifluzamide, thiophanate, tolclofos-methyl, trifloxystrobin and triticonazole, ipflufenoquin, inpyrfluxam, aminopyrifen, fluindapyr, ipfentrifluconazole, mefentrifluconazole, quinofumelin, and combinations thereof.

In certain embodiments, the chemical fungicide is selected from the group consisting of azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, benalaxyl, benalaxyl-M, benodanil, benzovindiflupyr, bixafen, boscalid, carboxin, fenfuram, fenhexamid, flutolanil, fluxapyroxad, furametpyr, isopyrazam, isotianil, kiralaxyl, mepronil, metalaxyl, metalaxyl-M (mefenoxam), penflufen, penthiopyrad, sedaxane, tecloftalam, thifluzamide, tiadinil, fluopicolide, fluopyram, mandiproamid, fenhexamid, silthiofam, azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, cyazofamid, prochloraz, pyrimethanil, acibenzolar-S-methyl, ametoctradin, amisulbrom, captan, fosetyl, in particular Fosetyl-Al, chlorothalonil, pencycuron, acibenzolar-S-methyl, azoxystrobin, bixafen, boscalid, carbendazim, cyproconazole, dimethomorph, epoxiconazole, fludioxonil, fluopyram, fluoxastrobin, fluxapyroxad, fosetyl-Al, ipconazole, isopyrazam, kresoxim-methyl, mefenoxam, metalaxyl, metconazole, orysastrobin, penflufen, penthiopyrad, picoxystrobin, propiconazole, prothioconazole, pydiflumetofen, pyraclostrobin, sedaxane, silthiofam, tebuconazole, trifloxystrobin and triticonazole, ipflufenoquin, inpyrfluxam, aminopyrifen, fluindapyr, ipfentrifluconazole, mefentrifluconazole, quinofumelin and combinations thereof.

For additional examples of fungicides that may be included in the compositions in some embodiments see, e.g., Bradley, Managing Diseases, ILLINOIS AGRONOMY HANDBOOK (2008), the content and disclosure of which are incorporated herein by reference. Fungicides useful for compositions in some embodiments may exhibit activity against one or more fungal plant pathogens, including but not limited to Phytophthora, Rhizoctonia, Fusarium, Pythium, Phomopsis, Selerotinia or Phakopsora, and combinations thereof. Non-limiting examples of commercial fungicides which may be suitable for the compositions in some embodiments include PROTÉGÉ, RIVAL or ALLEGIANCE FL or LS (Gustafson, Plano, Texas), WARDEN RTA (Agrilance, St. Paul, Minnesota), APRON XL, APRON MAXX RTA or RFC, MAXIM 4FS or XL (Syngenta, Wilmington, Delaware), CAPTAN (Arvesta, Guelph, Ontario) and PROTREAT (Nitragin Argentina, Buenos Ares, Argentina). Active ingredients in these and other commercial fungicides include, but are not limited to, fludioxonil, mefenoxam, azoxystrobin and metalaxyl. Active ingredients in these and other commercial fungicides include, but are not limited to benzovindiflupyr, bixafen, fluxapyroxad, fluopyram, fludioxonil, mefenoxam, trifloxystrobin, pyraclostrobin, azoxystrobin and metalaxyl, tebuconazole, prothioconazole, metconazole, epoxiconazole, ipfentrifluconazole, mefentrifluconazole. Commercial fungicides may be used in accordance with a manufacturer's recommended amounts or concentrations.

In some embodiments, the pesticidal agent comprises one or more biopesticidal agents the presence and/or output of which is toxic to at least one fungus and/or bacteria. For example, the composition may comprise one or more of Ampelomyces quisqualis AQ 10® (Intrachem Bio GmbH & Co. KG, Germany), Aspergillus flavus AFLA-GUARD® (Syngenta Crop Protection, Inc., CH), Aureobasidium pullulans BOTECTOR® (bio-ferm GmbH, Germany), Bacillus pumilus AQ717 (NRRL B-21662), Bacillus pumilus NRRL B-30087, Bacillus AQ175 (ATCC 55608), Bacillus AQ177 (ATCC 55609), Bacillus subtilis AQ713 (NRRL B-21661), Bacillus subtilis AQ743 (NRRL B-21665), Bacillus amyloliquefaciens FZB24, Bacillus amyloliquefaciens FZB42, Bacillus amyloliquefaciens NRRL B-50349, Bacillus subtilis ATCC 55078, Bacillus subtilis ATCC 55079, Bacillus thuringiensis AQ52 (NRRL B-21619), Candida oleophila 1-182 (e.g., ASPIRE® from Ecogen Inc., USA), Candida saitoana BIOCURE® (in mixture with lysozyme; BASF, USA) and BIOCOAT® (ArystaLife Science, Ltd., Cary, NC), Clonostachys rosea f. catenulata (also referred to as Gliocladium catenulatum) J1446 (PRESTOP®, Verdera, Finland), Coniothyrium minitans CONTANS® (Prophyta, Germany), Cryphonectria parasitica (CNICM, France), Cryptococcus albidus YIELD PLUS® (Anchor Bio-Technologies, South Africa), Fusarium oxysporum BIOFOX® (from S.I.A.P.A., Italy) and FUSACLEAN® (Natural Plant Protection, France), Metschnikowia fructicola SHEMER® (Agrogreen, Israel), Microdochium dimerum ANTIBOT® (Agrauxine, France), Muscodor albus NRRL 30547, Muscodor roseus NRRL 30548, Phlebiopsis gigantea ROTSOP® (Verdera, Finland), Pseudozyma flocculosa SPORODEX® (Plant Products Co. Ltd., Canada), Pythium oligandrum DV74 (POLYVERSUM®, Remeslo SSRO, Biopreparaty, Czech Rep.), Reynoutria sachlinensis (e.g., REGALIA® from Marrone BioInnovations, USA), Streptomyces NRRL B-30145, Streptomyces M1064, Streptomyces galbus NRRL 30232, Streptomyces lydicus WYEC 108 (ATCC 55445), Streptomyces violaceusniger YCED 9 (ATCC 55660; DE-THATCH-9®, DECOMP-9® and THATCH CONTROL®, Idaho Research Foundation, USA), Streptomyces WYE 53 (ATCC 55750; DE-THATCH-9®, DECOMP-9® and THATCH CONTROL®, Idaho Research Foundation, USA), Talaromyces flavus V117b (PROTUS®, Prophyta, Germany), Trichoderma asperellum SKT-1 (ECO-HOPE®, Kumiai Chemical Industry Co., Ltd., Japan), Trichoderma atroviride LC52 (SENTINEL®, Agrimm Technologies Ltd, NZ), Trichoderma harzianum T-22 (PLANTSHIELD®, der Firma BioWorks Inc., USA), Trichoderma harzianum TH-35 (ROOT PRO®, from Mycontrol Ltd., Israel), Trichoderma harzianum T-39 (TRICHODEX®, Mycontrol Ltd., Israel; TRICHODERMA 2000®, Makhteshim Ltd., Israel), Trichoderma harzianum ICC012 and Trichoderma viride TRICHOPEL (Agrimm Technologies Ltd, NZ), Trichoderma harzianum ICC012 and Trichoderma viride ICC080 (REMEDIER® WP, Isagro Ricerca, Italy), Trichoderma polysporum and Trichoderma harzianum (BINAB®, BINAB Bio-Innovation AB, Sweden), Trichoderma stromaticum TRICOVAB® (C.E.P.L.A.C., Brazil), Trichoderma virens GL-21 (SOILGARD®, Certis LLC, USA), and combinations thereof.

In some embodiments, the pesticidal agent comprises one or more suitable chemical herbicides. The herbicides may be a pre-emergent herbicide, a post-emergent herbicide, or a combination thereof. Non-limiting examples of chemical herbicides may comprise one or more acetyl CoA carboxylase (ACCase) inhibitors, acetolactate synthase (ALS) inhibitors, acetanilides, acetohydroxy acid synthase (AHAS) inhibitors, photosystem II inhibitors, photosystem I inhibitors, protoporphyrinogen oxidase (PPO or Protox) inhibitors, carotenoid biosynthesis inhibitors, enolpyruvylshikimate-3-phosphate (EPSP) synthase inhibitors, glutamine synthetase inhibitors, dihydropteroate synthetase inhibitors, mitosis inhibitors, 4-hydroxyphenyl-pyruvate-dioxygenase (4-HPPD) inhibitors, synthetic auxins, auxin herbicide salts, auxin transport inhibitors, nucleic acid inhibitors and/or one or more salts, esters, racemic mixtures and/or resolved isomers thereof. Non-limiting examples of chemical herbicides that can be useful in compositions of the present disclosure include 2,4-dichlorophenoxyacetic acid (2,4-D), 2,4,5-trichlorophenoxyacetic acid (2,4,5-T), ametryn, amicarbazone, aminocyclopyrachlor, acetochlor, acifluorfen, alachlor, atrazine, azafenidin, bentazon, benzofenap, bifenox, bromacil, bromoxynil, butachlor, butafenacil, butroxydim, carfentrazone-ethyl, chlorimuron, chlorotoluro, clethodim, clodinafop, clomazone, cyanazine, cycloxydim, cyhalofop, desmedipham, desmetryn, dicamba, diclofop, dimefuron, diflufenican, diuron, dithiopyr, ethofumesate, fenoxaprop, foramsulfuron, fluazifop, fluazifop-P, flufenacet, fluometuron, flufenpyr-ethyl, flumiclorac, flumiclorac-pentyl, flumioxazin, fluoroglycofen, fluthiacet- methyl, fomesafen, glyphosate, glufosinate, halosulfuron, haloxyfop, hexazinone, iodosulfuron, indaziflam, imazamox, imazaquin, imazethapyr, ioxynil, isoproturon, isoxaflutole, lactofen, linuron, mecoprop, mecoprop-P, mesosulfuron, mesotrion, metamitron, metazochlor, methibenzuron, metolachlor (and S-metolachlor), metoxuron, metribuzin, monolinuron, oxadiargyl, oxadiazon, oxaziclomefone, oxyfluorfen, phenmedipham, pretilachlor, profoxydim, prometon, prometrn, propachlor, propanil, propaquizafop, propisochlor, propoxycarbazone, pyraflufen-ethyl, pyrazon, pyrazolynate, pyrazoxyfen, pyridate, quizalofop, quizalofop-P (e.g., quizalofop-ethyl, quizalofop-P-ethyl, clodinafop-propargyl, cyhalofop-butyl, diclofop- methyl, fenoxaprop-P-ethyl, fluazifop-P-butyl, haloxyfop-methyl, haloxyfop-R-methyl), saflufenacil, sethoxydim, siduron, simazine, simetryn, sulcotrione, sulfentrazone, tebuthiuron, tembotrione, tepraloxydim, terbacil, terbumeton, terbuthylazine, thaxtomin (e.g., the thaxtomins described in US Patent No.: 7,989,393), thiencarbazone-methyl, thenylchlor, tralkoxydim, triclopyr, trietazine, trifloxysulfuron, tropramezone, salts and esters thereof; racemic mixtures and resolved isomers thereof and combinations thereof. In some embodiments, compositions can comprise acetochlor, clethodim, dicamba, flumioxazin, fomesafen, glyphosate, glufosinate, mesotrione, quizalofop, saflufenacil, sulcotrione, S-3100 and/or 2,4-D, and combinations thereof.

Additional examples of herbicides that may be included in compositions in some embodiments may be found in Hager, Weed Management, Illinois Agronomy Handbook (2008); and Loux et al., Weed Control Guide for Ohio, Indiana and Illinois (2015), the contents and disclosures of which are incorporated herein by reference. Commercial herbicides may be used in accordance with a manufacturer's recommended amounts or concentrations.

In some embodiments, the pesticidal agent comprises one or more biopesticidal agents the presence and/or output of which is toxic to at least one plant, including for example, weeds. Examples of biopesticides that may be included or used in compositions in some embodiments may be found in BURGES, supra; HALL & MENN, BIOPESTICIDES: USE AND DELIVERY (Humana Press) (1998); McCoy et al., Entomogenous fungi, in CRC HANDBOOK OF NATURAL PESTICIDES. MICROBIAL PESTICIDES, PART A. ENTOMOGENOUS PROTOZOA AND FUNGI (C. M. Inoffo, ed.), Vol. 5:151-236 (1988); SAMSON et al., ATLAS OF ENTOMOPATHOGENIC FUNGI (Springer-Verlag, Berlin) (1988); and deFaria and Wraight, Mycoinsecticides and Mycoacaricides: A comprehensive list with worldwide coverage and international classification of formulation types, BIOL. CONTROL (2007), the contents and disclosures of which are incorporated herein by reference.

In some embodiments, the composition comprises one or more additional agents.

In some embodiments, the composition comprises one or more beneficial biostimulants and/or microbial inoculants. Biostimulants or inoculants may enhance ion uptake, nutrient uptake, nutrient availability or delivery, or a combination thereof. Non-limiting examples of biostimulants or inoculants that may be included or used in compositions may include bacterial extracts (e.g., extracts of one or more diazotrophs, phosphate-solubilizing microorganisms and/or biopesticides), fungal extracts, humic acids (e.g., potassium humate), fulvic acids, myo-inositol, and/or glycine, and any combinations thereof. According to some embodiments, the biostimulants or inoculants may comprise one or more *Azospirillum* (e.g., an extract of media comprising *A*. *brasilense* INTA Az-39), one or more *Bradyrhizobium* (e.g., an extract of media comprising *B. elkanii* SEMIA 501, *B. elkanii* SEMIA 587, *B. elkanii* SEMIA 5019, *B. japonicum* NRRL B-50586 (also deposited as NRRL B-59565), *B. japonicum* NRRL B-50587 (also deposited as NRRL B-59566), *Bacillus amyloliquefaciens* TJ1000 (also known as 1BE, isolate ATCC BAA-390), *B.japonicum* NRRL B-50588 (also deposited as NRRL B-59567), *B.japonicum* NRRL B-50589 (also deposited as NRRL B-59568), *B. japonicum* NRRL B-50590 (also deposited as NRRL B-59569), *B. japonicum* NRRL B-50591 (also deposited as NRRL B-59570), *Trichoderma virens* G1-3 (ATCC 57678), *Trichoderma virens* G1-21 (Thermo Trilogy Corporation, Wasco, CA), *Trichoderma virens* G1-3 and *Bacillus amyloliquefaciens* FZB24, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO® (Ecosense Labs. (India) Pvt. Ltd., India, BIO-CURE® F from T. Stanes & Co. Ltd., Indien), *Trichoderma viride* TV1 (Agribiotec srl, Italy), *Trichoderma viride* ICC080, and/or *Ulocladium oudemansii* HRU3 (BOTRY-ZEN®, Botry-Zen Ltd, NZ)*. B. japonicum* NRRL B-50592 (also deposited as NRRL B-59571), *B. japonicum* NRRL B-50593 (also deposited as NRRL B-59572), *B. japonicum* NRRL B-50594 (also deposited as NRRL B-50493), *B.japonicum* NRRL B-50608, *B. jαponicum* NRRL B-50609, *B. japonicum* NRRL B-50610, *B. japonicum* NRRL B-50611, *B. japonicum* NRRL B-50612, *B. japonicum* NRRL B-50726, *B. japonicum* NRRL B-50727, *B. japonicum* NRRL B-50728, *B. japonicum* NRRL B-50729, *B. japonicum* NRRL B-50730, *B. japonicum* SEMIA 566, *B. japonicum* SEMIA 5079, *B.japonicum* SEMIA 5080, *B. japonicum* USDA 6, *B. japonicum* USDA 110, B. japonicum USDA 122, *B. japonicum* USDA 123, *B. japonicum* USDA 127, *B.japonicum* USDA 129 and/or *B. japonicum* USDA 532C), one or more *Rhizobium* extracts (e.g., an extract of media comprising R. *leguminosarum* SO12A-2), one or more *Sinorhizobium* extracts (e.g., an extract of media comprising S. *fredii* CCBAU114 and/or S. *fredii* USDA 205), one or more *Penicillium* extracts (e.g., an extract of media comprising P. *bilaiae* ATCC 18309, *P. bilaiae* ATCC 20851, *P. bilaiae* ATCC 22348, *P. bilaiae* NRRL 50162, *P. bilaiae* NRRL 50169, *P. bilaiae* NRRL 50776, *P. bilaiae* NRRL 50777, *P. bilaiae* NRRL 50778, *P. bilaiae* NRRL 50777, *P. bilaiae* NRRL 50778, *P. bilaiae* NRRL 50779, P. *bilaiae* NRRL 50780, *P. bilaiae* NRRL 50781, *P. bilaiae* NRRL 50782, *P. bilaiae* NRRL 50783, *P. bilaiae* NRRL 50784, *P. bilaiae* NRRL 50785, *P. bilaiae* NRRL 50786, *P. bilaiae* NRRL 50787, *P. bilaiae* NRRL 50788, *P. bilaiae* RS7B-SD1, *P. brevicompactum* AgRF18, *P. canescens* ATCC 10419, *P. expansum* ATCC 24692, *P. expansum* YT02, *P. fellatanum* ATCC 48694, *P. gaestrivorus* NRRL 50170, *P. glabrum* DAOM 239074, *P. glabrum* CBS 229.28, *P. janthinellum* ATCC 10455, *P. lanosocoeruleum* ATCC 48919, *P. radicum* ATCC 201836, *P. radicum* FRR 4717, *P. radicum* FRR 4719, *P. radicum* N93/47267 and/or *P. raistrickii* ATCC 10490), one or more *Pseudomonas* extracts (e.g., an extract of media comprising *P. jessenii* PS06), one or more acaricidal, insecticidal and/or nematicidal extracts (e.g., an extract of media comprising *Bacillus firmus* I-1582, *Bacillus mycoides* AQ726, NRRL B-21664; *Beauveria bassiana* ATCC-74040, *Beauveria bassiana* ATCC-74250, *Burkholderia sp.* A396 sp. nov. rinojensis, NRRL B-50319, *Chromobacterium subtsugae* NRRL B-30655, *Chromobacterium vaccinii* NRRL B-50880, *Flavobacterium* H492, NRRL B-50584, *Metarhizium anisopliae* F52 (also known as *Metarhizium anisopliae* strain 52, *Metarhizium anisopliae* strain 7, *Metarhizium anisopliae* strain 43 and *Metarhizium anisopliae* BIO-1020, TAE-001; deposited as DSM 3884, DSM 3885, ATCC 90448, SD 170 and ARSEF 7711) and/or *Paecilomyces fumosoroseus* FE991), and/or one or more fungicidal extracts (e.g., an extract of media comprising *Ampelomyces quisqualis* AQ 10® (Intrachem Bio GmbH & Co. KG, Germany), *Aspergillus flavus* AFLA-GUARD® (Syngenta Crop Protection, Inc., CH), *Aureobasidium pullulans* BOTECTOR® (bio-ferm GmbH, Germany), *Bacillus pumilus* AQ717 (NRRL B-21662), *Bacillus pumilus* NRRL B-30087, *Bacillus* AQ175 (ATCC 55608), *Bacillus* AQ177 (ATCC 55609), *Bacillus subtilis* AQ713 (NRRL B-21661), *Bacillus subtilis* AQ743 (NRRL B-21665), *Bacillus amyloliquefaciens* FZB24, *Bacillus amyloliquefaciens* NRRL B-50349, *Bacillus amyloliquefaciens* TJ1000 (also known as 1BE, isolate ATCC BAA-390), *Bacillus thuringiensis* AQ52 (NRRL B-21619), *Candida oleophila* 1-82 (e.g., ASPIRE® from Ecogen Inc., USA), *Candida saitoana* BIOCURE® (in mixture with lysozyme; BASF, USA) and BIOCOAT® (ArystaLife Science, Ltd., Cary, NC), *Clonostachys roseaf catenulata* (also referred to as *Gliocladium catenulatum*) J1446 (PRESTOP®, Verdera, Finland), *Coniothyrium minitans* CONTANS® (Prophyta, Germany), *Cryphonectria parasitica* (CNICM, France), *Cryptococcus albidus* YIELD PLUS® (Anchor Bio-Technologies, South Africa), *Fusarium oxysporum* BIOFOX® (from S.I.A.P.A., Italy) and FUSACLEAN® (Natural Plant Protection, France), *Metschnikowia fructicola* SHEMER® (Agrogreen, Israel), *Microdochium dimerum* ANTIBOT® (Agrauxine, France), *Muscodor albus* NRRL 30547, Muscodor *roseus* NRRL 30548, *Phlebiopsis gigantea* ROTSOP® (Verdera, Finland), *Pseudozyma flocculosa* SPORODEX® (Plant Products Co. Ltd., Canada), *Pythium oligandrum* DV74 (POLYVERSUM®, Remeslo SSRO, Biopreparaty, Czech Rep.), *Reynoutria sachlinensis* (e.g., REGALIA® from Marrone BioInnovations, USA), *Streptomyces* NRRL B-30145, *Streptomyces* M1064, *Streptomyces galbus* NRRL 30232, *Streptomyces lydicus* WYEC 108 (ATCC 55445), *Streptomyces violaceusniger* YCED 9 (ATCC 55660; DE-THATCH-9®, DECOMP-9® and THATCH CONTROL®, Idaho Research Foundation, USA), *Streptomyces* WYE 53 (ATCC 55750; DE-THATCH-9®, DECOMP-9® and THATCH CONTROL®, Idaho Research Foundation, USA), *Talaromyces flavus* V117b (PROTUS®, Prophyta, Germany), *Trichoderma asperellum* SKT-1 (ECO-HOPE®, Kumiai Chemical Industry Co., Ltd., Japan), *Trichoderma atroviride* LC52 (SENTINEL®, Agrimm Technologies Ltd, NZ), *Trichoderma harzianum* T-22 (PLANTSHIELD®, der Firma BioWorks Inc., USA), *Trichoderma harzianum* TH-35 (ROOT PRO®, from Mycontrol Ltd., Israel), *Trichoderma harzianum* T-39 (TRICHODEX®, Mycontrol Ltd., Israel; TRICHODERMA 2000®, Makhteshim Ltd., Israel), *Trichoderma harzianum* ICC012 and Trichoderma viride TRICHOPEL (Agrimm Technologies Ltd, NZ), *Trichoderma harzianum* ICC012 and Trichoderma viride ICC080 (REMEDIER® WP, Isagro Ricerca, Italy), *Trichoderma polysporum* and *Trichoderma harzianum* (BINAB®, BINAB Bio-Innovation AB, Sweden), *Trichoderma stromaticum* TRICOVAB® (C.E.P.L.A.C., Brazil), *Trichoderma virens* GL-21 (SOILGARD®, Certis LLC, USA), *Trichoderma virens* G1-3, ATCC 57678, *Trichoderma virens* G1-21 (Thermo Trilogy Corporation, Wasco, CA), *Trichoderma virens* G1-3 and *Bacillus amyloliquefaciens* FZB2, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO® (Ecosense Labs. (India) Pvt. Ltd., Indien, BIO-CURE® F from T. Stanes & Co. Ltd., Indien), *Trichoderma viride* TV1 (Agribiotec srl, Italy), *Trichoderma viride* ICC080, and/or *Ulocladium oudemansii* HRU3 (BOTRY-ZEN®, Botry-Zen Ltd, NZ)), and combinations thereof.

In some embodiments, the composition comprises one or more beneficial microbes. Non-limiting examples of such microbes include beneficial microbes selected from the following genera: *Actinomycetes, Agrobacterium, Arthrobacter, Alcaligenes, Acinetobacter* spp., *Azospirillum* spp., *Aureobacterium*, *Azobacter*, *Azorhizobium, Bacillus, Beijerinckia*, *Bradyrhizobium*, *Brevibacillus*, *Burkholderia*, *Chromobacterium, Chryseomonas* spp., *Clostridium, Clavibacter*, *Comamonas*, *Corynebacterium, Curtobacterium*, *Enterobacter, Eupenicillium* spp., *Exiguobacterium* spp., *Flavobacterium*, *Gluconobacter*, *Hydrogenophaga*, *Hymenoscyphous*, *Klebsiella*, *Kluyvera* spp., *Herbaspirillum*, *Methylobacterium*, *Microbacterium* spp., *Mitsuaria*, *Paenibacillus*, *Pasteuria*, *Photorhabdus*, *Phyllobacterium*, *Pseudomonas, Rhizobium, Rhizobacter*, *Rhizoctonia*, *Rhizopogon, Serratia*, *Sinorhizobium, Sphingobacterium*, *Sphingomonas, Swaminathania* spp., *Stenotrophomonas, Streptomyces* spp., *Thiobacillus, Variovorax*, *Vibrio*, *Xanthobacter*, *Xanthomonas* and *Xenorhabdus,* or any combination thereof. According to some embodiments, the compositions comprises one or more of *Bacillus amyloliquefaciens*, *Bacillus cereus, Bacillus firmus, Bacillus, lichenformis, Bacillus pumilus, Bacillus sphaericus, Bacillus velezensis, Bacillus subtilis, Bacillus thuringiensis, Chromobacterium subtsugae*, *Pasteuria penetrans*, *Pasteuria usage,* and *Pseudomonas fluorescens.* According to some embodiments, a microbe may comprise a fungus of the genus *Alternaria, Ampelomyces, Arthrobotrys* spp., *Aspergillus, Aureobasidium, Beauveria, Candida* spp., *Colletotrichum, Coniothyrium, Gigaspora* spp., *Gliocladium, Glomus* spp., *Laccaria* spp.,*Metarhizium*, *Mucor* spp., *Muscodor, Oidiodendron* spp., *Paecilomyces*, *Penicillium* spp., *Pisolithus* spp., *Scleroderma*, *Trichoderma*, *Typhula*, *Ulocladium*, and *Verticillium.* In another aspect, a fungus is *Beauveria bassiana*, *Coniothyrium minitans*, *Gliocladium virens, Muscodor albus, Paecilomyces lilacinus*, or *Trichoderma polysporum.*

In some embodiments, the composition comprises one or more lipo-chitooligosaccharides (LCOs), chitin oligomer(s) and/or chitosan oligomer(s) (collectively referred to hereinafter as COs), and/or chitinous compounds.

LCOs, sometimes referred to as symbiotic nodulation (Nod) signals (or Nod factors) or as Myc factors, consist of an oligosaccharide backbone of β-1,4-linked N-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues. See, e.g., Denarie et al., Ann. Rev. Biochem. 65:503 (1996); Diaz et al., Mol. Plant-Microbe Interactions 13:268 (2000); Hungria et al., Soil Biol. Biochem. 29:819 (1997); Hamel et al., Planta 232:787 (2010); and Prome et al., Pure & Appl. Chem. 70(1):55 (1998), the contents and disclosures of which are incorporated herein by reference.

LCOs may be synthetic or obtained from any suitable source. See, e.g., WO 2005/063784, WO 2007/117500 and WO 2008/071674, the contents and disclosures of which are incorporated herein by reference. In some aspects, a synthetic LCO may have the basic structure of a naturally occurring LCO but contains one or more modifications or substitutions, such as those described in Spaink, Crit. Rev. Plant Sci. 54:257 (2000). LCOs and precursors for the construction of LCOs (e.g., COs, which may themselves be useful as a biologically active ingredient) can be synthesized by genetically engineered organisms. See, e.g., Samain et al., Carbohydrate Res. 302:35 (1997); Cottaz et al., Meth. Eng. 7(4):311 (2005); and Samain et al., J. Biotechnol. 72:33 (1999) (e.g., Fig. 1 therein, which shows structures of COs that can be made recombinantly in E. coli harboring different combinations of genes nodBCHL), the contents and disclosures of which are incorporated herein by reference.

LCOs (and derivatives thereof) may be included or utilized in compositions in various forms of purity and can be used alone or in the form of a culture of LCO-producing bacteria or fungi. For example, OPTIMIZE® (commercially available from Monsanto Company (St. Louis, MO)) contains a culture of Bradyrhizobium japonicum that produces LCO. Methods to provide substantially pure LCOs include removing the microbial cells from a mixture of LCOs and the microbe, or continuing to isolate and purify the LCO molecules through LCO solvent phase separation followed by HPLC chromatography as described, for example, in U.S. Patent No. 5,549,718. Purification can be enhanced by repeated HPLC and the purified LCO molecules can be freeze-dried for long-term storage. According to some embodiments, the LCO(s) included in compositions of the present disclosure is/are at least 0.1%, 0.5%, 1%, 2%, 3%, 4%, 5%, 10%, 15%, 20%, 25%, 30%, 35%, 40%, 45%, 50%, 55%, 60%, 65%, 70%, 75%, 80%, 85%, 90%, 91%, 92%, 93%, 94%, 95%, 96%, 97%, 98%, 99% or 100% pure.

Compositions and methods in some embodiments may comprise analogues, derivatives, hydrates, isomers, salts and/or solvates of LCOs. LCOs may be incorporated into compositions of the present disclosure in any suitable amount(s)/concentration(s). For example, compositions of the present disclosure comprise about 1 x 10-20 M to about 1 x 10⁻¹ M LCO(s). For example, compositions of the present disclosure can comprise about 1 x 10⁻²⁰ M, 1 x 10⁻¹⁹ M, 1 x 10⁻¹⁸ M, 1 x 10⁻¹⁷ M, 1 x 10⁻¹⁶ M, 1 x 10⁻¹⁵ M, 1 x 10⁻¹⁴ M, 1 x 10⁻¹³ M, 1 x 10⁻¹² M, 1 x 10⁻¹¹ M, 1 x 10⁻¹⁰ M, 1 x 10⁻⁹ M, 1 x 10⁻¹¹ M, 1 x 10⁻⁷ M, 1 x 10⁻⁶ M, 1 x 10⁻⁵ M, 1 x 10⁻⁴ M, 1 x 10⁻³ M, 1 x 10⁻² M, 1 x 10⁻¹ M of one or more LCOs. In an aspect, the LCO concentration is 1 x 10⁻¹⁴ M to 1 x 10⁻⁵ M, 1 x 10⁻¹² M to 1 x 10⁻⁶ M, or 1 x 10⁻¹⁰ M to 1 x 10⁻⁷ M. In an aspect, the LCO concentration is 1 x 10⁻¹⁴ M to 1 x 10⁻⁵ M, 1 x 10⁻¹² M to 1 x 10⁻⁶ M, or 1 x 10⁻¹⁰ M to 1 x 10⁻⁷ M. The amount/concentration of LCO may be an amount effective to impart a positive trait or benefit to a plant, such as to enhance the disease resistance, growth and/or yield of the plant to which the composition is applied. According to some embodiments, the LCO amount/concentration is not effective to enhance the yield of the plant without beneficial contributions from one or more other constituents of the composition, such as CO and/or one or more pesticides.

In some embodiments the composition comprises one or more chitin oligomers and/or chitosan oligomers. See, e.g., D'Haeze et al., Glycobiol. 12(6):79R (2002); Demont-Cauletet al., Plant Physiol. 120(1):83 (1999); Hanel et al., Planta 232:787 (2010); Muller et al., Plant Physiol. 124:733 (2000); Robina et al., Tetrahedron 58:521-530 (2002); Rouge et al., Docking of Chitin Oligomers and Nod Factors on Lectin Domains of the LysM-RLK Receptors in the Medicago-Rhizobium Symbiosis, in The Molecular Immunology of Complex Carbohydrates-3 (Springer Science, 2011); Van der Holst et al., Curr. Opin. Struc. Biol. 11:608 (2001); and Wan et al., Plant Cell 21:1053 (2009), the contents and disclosures of which are incorporated by reference. COs may be obtained from any suitable source. For example, COs may be derived from an LCO. For example, in an aspect, compositions comprise one or more COs derived from an LCO obtained (i.e., isolated and/or purified) from a strain of Azorhizobium, Bradyrhizobium (e.g., B. japonicum), Mesorhizobium, Rhizobium (e.g., R. leguminosarum), Sinorhizobium (e.g., S. meliloti), or mycorhizzal fungi (e.g., Glomus intraradicus).

Alternatively, the CO may be synthetic. Methods for the preparation of recombinant COs are known in the art. See, e.g., Cottaz et al., Meth. Eng. 7(4):311 (2005); Samain et al., Carbohydrate Res. 302:35 (1997); and Samain et al., J. Biotechnol. 72:33 (1999), the contents and disclosures of which are incorporated herein by reference. COs (and derivatives thereof) may be included or utilized in compositions in various forms of purity and can be used alone or in the form of a culture of CO-producing bacteria or fungi. According to some embodiments, the CO(s) included in compositions may be at least 0.1%, 0.5%, 1%, 2%, 3%, 4%, 5%, 6%, 7%, 8%, 9%, 10%, 15%, 20%, 30%, 40%, 50%, 60%, 70%, 75%, 80%, 85%, 90%, 91%, 92%, 93%, 94%, 95%, 96%, 97%, 98%, 99%, 99.5% or more pure. It is to be understood that compositions and methods of the present disclosure can comprise hydrates, isomers, salts and/or solvates of COs. COs in some embodiments may be incorporated into compositions in any suitable amount(s)/concentration(s). For example, compositions in some embodiments may comprise about 1 x 10-20 M to about 1 x 10⁻¹ M COs, such as about 1 x 10⁻²⁰ M, 1 x 10⁻¹⁹ M, 1 x 10⁻¹⁸ M, 1 x 10⁻¹⁷ M, 1 x 10⁻¹⁶ M, 1 x 10⁻¹⁵ M, 1 x 10⁻¹⁴ M, 1 x 10⁻¹³ M, 1 x 10-12 M, 1 x 10⁻¹¹ M, 1 x 10⁻¹⁰ M, 1 x 10⁻⁹ M, 1 x 10⁻¹¹ M, 1 x 10⁻⁷ M, 1 x 10⁻⁶ M, 1 x 10⁻⁵ M, 1 x 10⁻⁴ M, 1 x 10⁻³ M, 1 x 10⁻² M, or 1 x 10⁻¹ M of one or more COs. For example, the CO concentration may be 1 x 10⁻¹⁴ M to 1 x 10⁻⁵ M, 1 x 10⁻¹² M to 1 x 10⁻⁶ M, or 1 x 10⁻¹⁰ M to 1 x 10⁻⁷ M. The amount/concentration of CO may be an amount effective to impart or confer a positive trait or benefit to a plant, such as to enhance the soil microbial environment, nutrient uptake, or increase the growth and/or yield of the plant to which the composition is applied. Compositions in some embodiments may comprise one or more suitable chitinous compounds, such as, for example, chitin (IUPAC: N-[5-[[3-acetylamino-4,5-dihydroxy-6-(hydroxymethyl)oxan-2yl]methoxymethyl]-2-[[5-acetylamino-4,6-dihydroxy-2-(hydroxymethyl)oxan-3-yl]methoxymethyl]-4-hydroxy-6-(hydroxymethyl)oxan-3-ys]ethanamide), chitosan (IUPAC: 5-amino-6-[5-amino-6-[5-amino-4,6-dihydroxy-2(hydroxymethyl)oxan-3-yl]oxy-4-hydroxy-2-(hydroxymethyl)oxan-3-yl]oxy-2(hydroxymethyl)oxane-3,4-diol), and isomers, salts and solvates thereof.

Chitins and chitosans, which are major components of the cell walls of fungi and the exoskeletons of insects and crustaceans, are composed of GlcNAc residues. Chitins and chitosans may be obtained commercially or prepared from insects, crustacean shells, or fungal cell walls.

Methods for the preparation of chitin and chitosan are known in the art. See, e.g., U.S. Patent Nos. 4,536,207 (preparation from crustacean shells) and 5,965,545 (preparation from crab shells and hydrolysis of commercial chitosan); and Pochanavanich et al., Lett. Appl. Microbiol. 35:17 (2002) (preparation from fungal cell walls). Deacetylated chitins and chitosans may be obtained that range from less than 35% to greater than 90% deacetylation and cover a broad spectrum of molecular weights, e.g., low molecular weight chitosan oligomers of less than 15kD and chitin oligomers of 0.5 to 2kD; "practical grade" chitosan with a molecular weight of about 15 kD; and high molecular weight chitosan of up to 70kD. Chitin and chitosan compositions are commercially available. Commercial products include, for example, ELEXA® (Plant Defense Boosters, Inc.) and BEYOND™ (Agrihouse, Inc.).

In some embodiments, the composition comprises one or more suitable flavonoids, including, but not limited to, anthocyanidins, anthoxanthins, chalcones, coumarins, flavanones, flavanonols, flavans and isoflavonoids, as well as analogues, derivatives, hydrates, isomers, polymers, salts and solvates thereof. Flavonoids are phenolic compounds having the general structure of two aromatic rings connected by a three-carbon bridge. Classes of flavonoids are known in the art. See, e.g., Jain et al., J. Plant Biochem. & Biotechnol. 11:1 (2002); and Shaw et al., Environ. Microbiol. 11:1867 (2006), the contents and disclosures of which are incorporated herein by reference. Several flavonoid compounds are commercially available. Flavonoid compounds may be isolated from plants or seeds, e.g., as described in U.S. Patents 5,702,752; 5,990,291; and 6,146,668. Flavonoid compounds may also be produced by genetically engineered organisms, such as yeast, See, e.g. Ralston et al., Plant Physiol. 137:1375 (2005).

In some embodiments, the composition comprises one or more flavanones, such as one or more of butin, eriodictyol, hesperetin, hesperidin, homoeriodictyol, isosakuranetin, naringenin, naringin, pinocembrin, poncirin, sakuranetin, sakuranin, and/or sterubin, one or more flavanonols, such as dihydrokaempferol and/or taxifolin, one or more flavans, such as one or more flavan-3-ols (e.g., catechin (C), catechin 3-gallate (Cg), epicatechins (EC), epigallocatechin (EGC) epicatechin 3-gallate (ECg), epigallcatechin 3-gallate (EGCg), epiafzelechin, fisetinidol, gallocatechin (GC), gallcatechin 3-gallate (GCg), guibourtinidol, mesquitol, robinetinidol, theaflavin-3-gallate, theaflavin-3'-gallate, theflavin-3,3'-digallate, thearubigin), flavan-4-ols (e.g., apiforol and/or luteoforol) and/or flavan-3,4-diols (e.g., leucocyanidin, leucodelphinidin, leucofisetinidin, leucomalvidin, luecopelargonidin, leucopeonidin, leucorobinetinidin, melacacidin and/or teracacidin) and/or dimers, trimers, oligomers and/or polymers thereof (e.g., one or more proanthocyanidins), one or more isoflavonoids, such as one or more isoflavones or flavonoid derivatives (e.g, biochanin A, daidzein, formononetin, genistein and/or glycitein), isoflavanes (e.g., equol, ionchocarpane and/or laxifloorane), isoflavandiols, isoflavenes (e.g., glabrene, haginin D and/or 2-methoxyjudaicin), coumestans (e.g., coumestrol, plicadin and/or wedelolactone), pterocarpans, roetonoids, neoflavonoids (e.g, calophyllolide, coutareagenin, dalbergichromene, dalbergin, nivetin), and/or pterocarpans (e.g., bitucarpin A, bitucarpin B, erybraedin A, erybraedin B, erythrabyssin II, erthyrabissin-1, erycristagallin, glycinol, glyceollidins, glyceollins, glycyrrhizol, maackiain, medicarpin, morisianine, orientanol, phaseolin, pisatin, striatine, trifolirhizin), and combinations thereof. Flavonoids and their derivatives may be included in compositions in any suitable form, including, but not limited to, polymorphic and crystalline forms. Flavonoids may be included in compositions in any suitable amount(s) or concentration(s). The amount/concentration of a flavonoid(s) may be an amount effective, which may be indirectly through activity on soil microorganisms or other means, such as to enhance plant nutrition and/or yield. According to some embodiments, a flavonoid amount/concentration may not be effective to enhance the nutrition or yield of the plant without the beneficial contributions from one or more other ingredients of the composition, such as LCO, CO, and/or one or more pesticides.

In some embodiments, the composition comprises one or more non-flavonoid nod-gene inducer(s), including, but not limited to, jasmonic acid ([1R-[1α,2β(Z)]]-3-oxo-2-(pentenyl)cyclopentaneacetic acid; JA), linoleic acid ((Z,Z)-9,12-Octadecadienoic acid) and/or linolenic acid ((Z,Z,Z)-9,12,15-octadecatrienoic acid), and analogues, derivatives, hydrates, isomers, polymers, salts and solvates thereof. Jasmonic acid and its methyl ester, methyl jasmonate (MeJA), collectively known as jasmonates, are octadecanoid-based compounds that occur naturally in some plants (e.g., wheat), fungi (e.g., Botryodiplodia theobromae, Gibbrella fujikuroi), yeast (e.g., Saccharomyces cerevisiae) and bacteria (e.g., Escherichia coli). Linoleic acid and linolenic acid may be produced in the course of the biosynthesis of jasmonic acid.

Derivatives of jasmonic acid, linoleic acid, and linolenic acid that may be included or used in compositions in some embodiments include esters, amides, glycosides and salts thereof. Representative esters are compounds in which the carboxyl group of linoleic acid, linolenic acid, or jasmonic acid has been replaced with a --COR group, where R is an -OR1 group, in which R1 is: an alkyl group, such as a C₁-C₈ unbranched or branched alkyl group, e.g., a methyl, ethyl or propyl group; an alkenyl group, such as a C₂-C₈ unbranched or branched alkenyl group; an alkynyl group, such as a C₂-C₈ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Representative amides are compounds in which the carboxyl group of linoleic acid, linolenic acid, or jasmonic acid has been replaced with a --COR group, where R is an NR2R3 group, in which R2 and R3 are each independently: a hydrogen; an alkyl group, such as a C₁-C₈ unbranched or branched alkyl group, e.g., a methyl, ethyl or propyl group; an alkenyl group, such as a C₂-C₈ unbranched or branched alkenyl group; an alkynyl group, such as a C₂-C₈ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Esters may be prepared by known methods, such as acid-catalyzed nucleophilic addition, wherein the carboxylic acid is reacted with an alcohol in the presence of a catalytic amount of a mineral acid. Amides may also be prepared by known methods, such as by reacting the carboxylic acid with the appropriate amine in the presence of a coupling agent, such as dicyclohexyl carbodiimide (DCC), under neutral conditions. Suitable salts of linoleic acid, linolenic acid and j asmonic acid include, for example, base addition salts. The bases that may be used as reagents to prepare metabolically acceptable base salts of these compounds include those derived from cations such as alkali metal cations (e.g., potassium and sodium) and alkaline earth metal cations (e.g., calcium and magnesium). These salts may be readily prepared by mixing a solution of linoleic acid, linolenic acid, or jasmonic acid with a solution of the base. The salts may be precipitated from solution and collected by filtration, or may be recovered by other means such as by evaporation of the solvent. In some embodiments, the composition comprises one or more plant growth regulators including, but not limited to, ethephon and/or thidiazuron.

In some embodiments, the composition comprises one or more karrakins, including but not limited to 2H-furo[2,3-c]pyran-2-ones, as well as analogues, derivatives, hydrates, isomers, polymers, salts and solvates thereof. Examples of biologically acceptable salts of karrakins include acid addition salts formed with biologically acceptable acids, examples of which include hydrochloride, hydrobromide, sulphate or bisulphate, phosphate or hydrogen phosphate, acetate, benzoate, succinate, fumarate, maleate, lactate, citrate, tartrate, gluconate; methanesulphonate, benzenesulphonate and p-toluenesulphonic acid. Additional biologically acceptable metal salts may include alkali metal salts, with bases, examples of which include the sodium and potassium salts. Karrakins may be incorporated into compositions in any suitable amount(s) or concentration(s). For example, the amount/concentration of a karrakin may be an amount or concentration effective to impart or confer a positive trait or benefit to a plant, such as to enhance the disease resistance, growth and/or yield of the plant to which the composition is applied. In an aspect, a karrakin amount/concentration may not be effective to enhance the disease resistance, growth and/or yield of the plant without beneficial contributions from one or more other ingredients of the composition, such as a LCO, CO and/or one or more pesticides.

In some embodiments, the composition comprises one or more anthocyanidins and/or anthoxanthins, such as one or more of cyanidin, delphinidin, malvidin, pelargonidin, peonidin, petunidin, flavones (e.g., apigenin, baicalein, chrysin, 7,8-dihydroxyflavone, diosmin, flavoxate, 6-hydroxyflavone, luteolin, scutellarein, tangeritin and/or wogonin) and/or flavonols (e.g., amurensin, astragalin, azaleatin, azalein, fisetin, furanoflavonols galangin, gossypetin, 3-hydroxyflavone, hyperoside, icariin, isoquercetin, kaempferide, kaempferitrin, kaempferol, isorhamnetin, morin, myricetin, myricitrin, natsudaidain, pachypodol, pyranoflavonols quercetin, quericitin, rhamnazin, rhamnetin, robinin, rutin, spiraeoside, troxerutin and/or zanthorhamnin), and combinations thereof.

In some embodiments, the composition comprises one or more gluconolactone and/or an analogue, derivative, hydrate, isomer, polymer, salt and/or solvate thereof. Gluconolactone may be incorporated into compositions in any suitable amount(s)/concentration(s). For example, the amount/concentration of a gluconolactone amount/concentration may be an amount effective to impart or confer a positive trait or benefit to a plant, such as to enhance the disease resistance, growth and/or yield of the plant to which the composition is applied. In an aspect, the gluconolactone amount/concentration may not be effective to enhance the disease resistance, growth and/or yield of the plant without beneficial contributions from one or more other ingredients of the composition, such as a LCO, CO and/or one or more pesticides.

In some embodiments, the composition comprises one or more nutrient(s) and/or fertilizer(s), such as organic acids (e.g., acetic acid, citric acid, lactic acid, malic acid, taurine, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), vitamins, (e.g., vitamin A, vitamin B complex (i.e., vitamin B1, vitamin B2, vitamin B3, vitamin B5, vitamin B6, vitamin B7, vitamin B8, vitamin B9, vitamin B12, choline) vitamin C, vitamin D, vitamin E, vitamin K.), and/or carotenoids (a-carotene, β-carotene, cryptoxanthin, lutein, lycopene, zeaxanthin, etc.), and combinations thereof. In an aspect, compositions of the present disclosure may comprise macro- and micronutrients of plants or microbes, including phosphorous, boron, chlorine, copper, iron, manganese, molybdenum and/or zinc. According to some embodiments, compositions may comprise one or more beneficial micronutrients. Non-limiting examples of micronutrients for use in compositions described herein may include vitamins, (e.g., vitamin A, vitamin B complex (i.e., vitamin B1, vitamin B2, vitamin B3, vitamin B5, vitamin B6, vitamin B7, vitamin B8, vitamin B9, vitamin B12, choline) vitamin C, vitamin D, vitamin E, vitamin K, carotenoids (a-carotene, β-carotene, cryptoxanthin, lutein, lycopene, zeaxanthin, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), organic acids (e.g., acetic acid, citric acid, lactic acid, malic acid, taurine, etc.), and combinations thereof. In a particular aspect, compositions may comprise phosphorous, boron, chlorine, copper, iron, manganese, molybdenum, and/or zinc, and combinations thereof. For compositions comprising phosphorous, it is envisioned that any suitable source of phosphorous may be used. For example, phosphorus may be derived from a rock phosphate source, such as monoammonium phosphate, diammonium phosphate, monocalcium phosphate, super phosphate, triple super phosphate, and/or ammonium polyphosphate, an organic phosphorous source, or a phosphorous source capable of solubilization by one or more microorganisms (e.g., Penicillium bilaiae).

### Surfactant Component

In various embodiments, the granular agrochemical composition further comprises an anionic surfactant component and/or a nonionic surfactant component. For example, various granular agrochemical compositions described herein comprise an agrochemical component comprising a 3,5-disubstituted-1,2,4-oxadiazole or a salt thereof, , in particular tioxazafen, an anionic surfactant component, and a nonionic surfactant component. Surfactants may play an important role during the process of producing the granular agrochemical composition by improving the necessary binding, adhesion or absorption of a 3,5-disubstituted-1,2,4-oxadiazole or a salt thereof, in particular tioxazafen, or improving the release of a 3,5-disubstituted-1,2,4-oxadiazole or a salt thereof, in particular tioxazafen, from the granule into the soil after the granular agrochemical composition has been applied to the soil.

The anionic surfactant component can comprise, for example, alkyl sulfates, alcohol sulfates, alcohol ether sulfates, alpha olefin sulfonates, alkylaryl ether sulfates, arylsulfonates, alkylsulfonates, alkylaryl sulfonates, sulfosuccinates, mono- or diphosphate esters of polyalkoxylated alkyl alcohols or alkyl phenols, mono- or disulfosuccinate esters of alcohols or polyalkoxylated alkanols, alcohol ether carboxylates, phenol ether carboxylates, or a combination thereof.

In various embodiments, the anionic surfactant component comprises an alkylaryl sulfonate (e.g., a calcium alkylaryl sulfonate). "Alkylaryl sulfonate" refers to a salt of an alkylaryl sulfonic acid. It may be an ammonium, alkali, or an alkaline earth metal salt of an aryl that is substituted with both an alkyl group and a sulfonic acid group that can form a salt. Alkylaryl sulfonates have been found to be effective at forming stable compositions comprising the 3,5-disubstituted-1,2,4-oxadiazole compounds, particularly at high concentrations of the agrochemical component.

Examples of commercially available anionic surfactants include sodium dodecylsulfate (Na-DS, SDS), MORWET D-425 (a sodium salt of alkyl naphthalene sulfonate condensate, available from Akzo Nobel), MORWET D-500 (a sodium salt of alkyl naphthalene sulfonate condensate with a block copolymer, available from Akzo Nobel), sodium dodecylbenzene sulfonic acid (Na-DBSA), diphenyloxide disulfonate, naphthalene formaldehyde condensate, DOWFAX (available from Dow), ATLOX 4838B (a calcium salt of alkylaryl sulfonate in 2-ethylhexanol, available from Croda), SOPROPHOR 4D 384 (TRISTYRYPHENOL ETHOXYLATE SULFATE from Solvay), dihexylsulfosuccinate, and dioctylsulfosuccinate, alkyl naphthalene sulfonate condensates, and salts or combinations thereof.

As noted, the granular agrochemical compositions described herein can also include a nonionic surfactant component comprising one or more nonionic surfactants. In various embodiments, the nonionic surfactant component comprises at least one nonionic surfactant having a hydrophilic-lipophilic balance (HLB) value of from about 5 to about 20 or from about 7 to about 16. A combination of nonionic surfactants having a wide range of HLB values can provide for greater stability when the composition is formulated as an EC and can provide for improved blooming of the EC to an oil-in-water emulsion when diluted with water. For example, the nonionic surfactant component can comprise a surfactant having an HLB value from about 5 to about 8, a surfactant having an HLB value from about 12 to about 14, a surfactant having an HLB value from about 15 to about 17, and mixtures thereof.

In various embodiments, the nonionic surfactant component comprises a nonionic surfactant selected from the group consisting of alkoxylated fatty oils, sorbitan esters, ethoxylated sorbitan esters, alkoxylated alkylphenols, alkoxylated alcohols, polyalkylene oxide block copolymers, lanolin derivatives, and combinations thereof. In some embodiments, the nonionic surfactant component comprises an ethoxylated glyceride (e.g., a polyethoxylated castor oil, including ETOCAS 10-LQ (PEG-10 castor oil) and ETOCAS 40-22 (PEG-40 castor oil) available from Croda), a polyalkylene oxide block copolymer (e.g., ATLAS G5002L available from Croda), a difunctional block copolymer surfactant terminating in primary hydroxyl groups (Pluronic L35 by BASF), an acrylic copolymer (Atlox 4913 with an HLB of 12), and/or an ethoxylated sorbitan ester (e.g., TWEEN 20 available from Croda).

Further examples of suitable nonionic surfactants include sorbitan esters, e.g., SPAN 20, SPAN 40, SPAN 80, SPAN 65, and SPAN 85 (available from Croda); ethoxylated sorbitan esters, e.g., TWEEN 20, TWEEN 40, TWEEN 60, TWEEN 80, and TWEEN 85 (available from Croda); alkoxylated alkylphenols, e.g., IGEPAL CA-210, IGEPAL CA-520, IGEPAL CA-720, IGEPAL CO-210, IGEPAL CO-520, IGEPAL CO-630, IGEPAL CO-720, IGEPAL CO-890, and IGEPAL DM-970 (available from Aldrich), and Triton X-100 (available from Dow); alkoxylated alcohols, e.g., BRIJ S10, BRIJ S20, BRIJ 30, BRIJ 52, BRIJ 56, BRIJ 58, BRIJ 72, BRIJ 76, BRIJ 78, BRIJ 92V, BRIJ 97, and BRIJ 98 (available from Croda); block copolymer ethers, e.g., PLURONIC L-31, PLURONIC L-35, PLURONIC L-61, PLURONIC L-81, PLURONIC L-64, PLURONIC L-121, PLURONIC 10R5, PLURONIC 17R4, and PLURONIC 31R1 (available from BASF), ATLAS G-5000 and ATLAS G-5002L (available from Croda), ATLOX 4912 and ATLOX 4912-SF (available from Croda); and lanolin derivatives, e.g., SOLUPLUS (available from BASF), LANEXOL AWS (available from Croda), or combinations thereof.

The granular agrochemical compositions described herein comprising a 3,5-disubstituted-1,2,4-oxadiazole or a salt thereof, in particular tioxazafen, and a particulate carrier, and at least 2 % wt water can also include a nonionic surfactant component comprising one or more nonionic surfactants and an anionic surfactant component comprising one or more anionic surfactants. Furtheron, the granular agrochemical compositions described herein comprising a 3,5-disubstituted-1,2,4-oxadiazole or a salt thereof, in particular tioxazafen, and a particulate carrier, and at least 2 % wt water can also include a nonionic surfactant component comprising one or more nonionic surfactants and an anionic surfactant component comprising one or more anionic surfactants. In various embodiments the granular agrochemical compositions described herein comprising a 3,5-disubstituted-1,2,4-oxadiazole or a salt thereof, in particular tioxazafen, and a particulate carrier, and at least 2 % wt water can also include a nonionic surfactant component comprising one or more nonionic surfactants selected from the group consisting of alkoxylated fatty oils, sorbitan esters, ethoxylated sorbitan esters, alkoxylated alkylphenols, alkoxylated alcohols, polyalkylene oxide block copolymers, lanolin derivatives; and an anionic surfactant component comprising one or more anionic surfactants selected from the group consisting of alkyl sulfates, alcohol sulfates, alcohol ether sulfates, alpha olefin sulfonates, alkylaryl ether sulfates, arylsulfonates, alkylsulfonates, alkylaryl sulfonates, sulfosuccinates, mono- or diphosphate esters of polyalkoxylated alkyl alcohols or alkyl phenols, mono- or disulfosuccinate esters of alcohols or polyalkoxylated alkanols, alcohol ether carboxylates, and phenol ether carboxylates.

In various embodiments, the total concentration of the anionic and nonionic surfactant component(s) in a concentrate composition ranges from about 0.1 wt.% to about 10 wt.%, from about 0.2 wt.% to about 10 wt.%, from about 0.3 wt.% to about 10 wt.%, from about 0.4 wt.% to about 10 wt.%, from about 0.5 wt.% to about 10 wt.%, from about 0.1 wt.% to about 10 wt.%, from about 0. 1 wt.% to about 8 wt.%, from about 0.1 wt.% to about 5 wt.%, from about 0.1 wt.% to about 4 wt.%, from 0.1 wt.% to about 3 wt.%, from about 0.1 wt.% to about 2 wt.%, from about 0.1 wt.% to about 1 wt.%, from about 0.2 wt.% to about 10 wt.%, from about 0. 2 wt.% to about 8 wt.%, from about 0.2 wt.% to about 5 wt.%, from about 0.2 wt.% to about 4 wt.%, from 0.2 wt.% to about 3 wt.%, from about 0.2 wt.% to about 2 wt.%, from about 0.2 wt.% to about 1 wt.%, from about 0.3 wt.% to about 10 wt.%, from about 0. 3 wt.% to about 8 wt.%, from about 0.3 wt.% to about 5 wt.%, from about 0.3 wt.% to about 4 wt.%, from 0.3 wt.% to about 3 wt.%, from about 0.3 wt.% to about 2 wt.%, from about 0.3 wt.% to about 1 wt.%, from about 0.4 wt.% to about 10 wt.%, from about 0. 4 wt.% to about 8 wt.%, from about 0.4 wt.% to about 5 wt.%, from about 0.4 wt.% to about 4 wt.%, from 0.4 wt.% to about 3 wt.%, from about 0.4 wt.% to about 2 wt.%, from about 0.4 wt.% to about 1 wt.%, from about 0.5 wt.% to about 10 wt.%, from about 0.5 wt.% to about 8 wt.%, or from about 0.5 wt.% to about 5 wt.%, from about 0.5 wt.% to about 4 wt.%, from about 0.5 wt.% to about 3 wt.%, or from about 0.5 wt.% to about 2 wt.%, from about 0.5 wt.% to about 1 wt.%.

In various embodiments, the total concentration of the anionic and nonionic surfactant component(s) in a concentrate composition ranges from 0.1 wt.% to 10 wt.%, from 0.2 wt.% to 10 wt.%, from 0.3 wt.% to 10 wt.%, from 0.4 wt.% to 10 wt.%, from 0.5 wt.% to 10 wt.%, from 0.1 wt.% to 10 wt.%, from 0. 1 wt.% to 8 wt.%, from 0.1 wt.% to 5 wt.%, from 0.1 wt.% to 4 wt.%, from 0.1 wt.% to 3 wt.%, from 0.1 wt.% to 2 wt.%, from 0.1 wt.% to 1 wt.%, from 0.2 wt.% to 10 wt.%, from 0. 2 wt.% to 8 wt.%, from 0.2 wt.% to 5 wt.%, from 0.2 wt.% to 4 wt.%, from 0.2 wt.% to 3 wt.%, from 0.2 wt.% to 2 wt.%, from 0.2 wt.% to 1 wt.%, from 0.3 wt.% to 10 wt.%, from 0. 3 wt.% to 8 wt.%, from 0.3 wt.% to 5 wt.%, from 0.3 wt.% to 4 wt.%, from 0.3 wt.% to 3 wt.%, from 0.3 wt.% to 2 wt.%, from 0.3 wt.% to 1 wt.%, from 0.4 wt.% to 10 wt.%, from 0. 4 wt.% to 8 wt.%, from 0.4 wt.% to 5 wt.%, from 0.4 wt.% to 4 wt.%, from 0.4 wt.% to 3 wt.%, from 0.4 wt.% to 2 wt.%, from 0.4 wt.% to 1wt.%, from 0.5 wt.% to 10 wt.%, from 0.5 wt.% to 8 wt.%, or from 0.5 wt.% to 5 wt.%, from 0.5 wt.% to 4 wt.%, from 0.5 wt.% to 3 wt.%, or from 0.5 wt.% to 2 wt.%, from 0.5 wt.% to 1 wt.%.

In various embodiments, the concentration of the anionic surfactant component(s) in a concentrate composition ranges from about 0.1 wt.% to about 10 wt.%, from about 0.2 wt.% to about 10 wt.%, from about 0.3 wt.% to about 10 wt.%, from about 0.4 wt.% to about 10 wt.%, from about 0.5 wt.% to about 10 wt.%, from about 0.1 wt.% to about 10 wt.%, from about 0. 1 wt.% to about 8 wt.%, from about 0.1 wt.% to about 5 wt.%, from about 0.1 wt.% to about 4 wt.%, from 0.1 wt.% to about 3 wt.%, from about 0.1 wt.% to about 2 wt.%, from about 0.1 wt.% to about 1 wt.%, from about 0.2 wt.% to about 10 wt.%, from about 0. 2 wt.% to about 8 wt.%, from about 0.2 wt.% to about 5 wt.%, from about 0.2 wt.% to about 4 wt.%, from 0.2 wt.% to about 3 wt.%, from about 0.2 wt.% to about 2 wt.%, from about 0.2 wt.% to about 1 wt.%, from about 0.3 wt.% to about 10 wt.%, from about 0. 3 wt.% to about 8 wt.%, from about 0.3 wt.% to about 5 wt.%, from about 0.3 wt.% to about 4 wt.%, from 0.3 wt.% to about 3 wt.%, from about 0.3 wt.% to about 2 wt.%, from about 0.3 wt.% to about 1 wt.%, from about 0.4 wt.% to about 10 wt.%, from about 0. 4 wt.% to about 8 wt.%, from about 0.4 wt.% to about 5 wt.%, from about 0.4 wt.% to about 4 wt.%, from 0.4 wt.% to about 3 wt.%, from about 0.4 wt.% to about 2 wt.%, from about 0.4 wt.% to about 1 wt.%, from about 0.5 wt.% to about 10 wt.%, from about 0.5 wt.% to about 8 wt.%, or from about 0.5 wt.% to about 5 wt.%, from about 0.5 wt.% to about 4 wt.%, from about 0.5 wt.% to about 3 wt.%, or from about 0.5 wt.% to about 2 wt.%, from about 0.5 wt.% to about 1 wt.%.

In various embodiments, the concentration of the anionic surfactant component(s) in a concentrate composition ranges from 0.1 wt.% to 10 wt.%, from 0.2 wt.% to 10 wt.%, from 0.3 wt.% to 10 wt.%, from 0.4 wt.% to 10 wt.%, from 0.5 wt.% to 10 wt.%, from 0.1 wt.% to 10 wt.%, from 0. 1 wt.% to 8 wt.%, from 0.1 wt.% to 5 wt.%, from 0.1 wt.% to 4 wt.%, from 0.1 wt.% to 3 wt.%, from 0.1 wt.% to 2 wt.%, from 0.1 wt.% to 1 wt.%, from 0.2 wt.% to 10 wt.%, from 0. 2 wt.% to 8 wt.%, from 0.2 wt.% to 5 wt.%, from 0.2 wt.% to 4 wt.%, from 0.2 wt.% to 3 wt.%, from 0.2 wt.% to 2 wt.%, from 0.2 wt.% to 1 wt.%, from 0.3 wt.% to 10 wt.%, from 0. 3 wt.% to 8 wt.%, from 0.3 wt.% to 5 wt.%, from 0.3 wt.% to 4 wt.%, from 0.3 wt.% to 3 wt.%, from 0.3 wt.% to 2 wt.%, from 0.3 wt.% to 1 wt.%, from 0.4 wt.% to 10 wt.%, from 0. 4 wt.% to 8 wt.%, from 0.4 wt.% to 5 wt.%, from 0.4 wt.% to 4 wt.%, from 0.4 wt.% to 3 wt.%, from 0.4 wt.% to 2 wt.%, from 0.4 wt.% to 1 wt.%, from 0.5 wt.% to 10 wt.%, from 0.5 wt.% to 8 wt.%, or from 0.5 wt.% to 5 wt.%, from 0.5 wt.% to 4 wt.%, from 0.5 wt.% to 3 wt.%, or from 0.5 wt.% to 2 wt.%, from 0.5 wt.% to 1 wt.%.

In various embodiments, the concentration of the non-ionic surfactant component(s) in a concentrate composition ranges from about 0.1 wt.% to about 10 wt.%, from about 0.2 wt.% to about 10 wt.%, from about 0.3 wt.% to about 10 wt.%, from about 0.4 wt.% to about 10 wt.%, from about 0.5 wt.% to about 10 wt.%, from about 0.1 wt.% to about 10 wt.%, from about 0. 1 wt.% to about 8 wt.%, from about 0.1 wt.% to about 5 wt.%, from about 0.1 wt.% to about 4 wt.%, from 0.1 wt.% to about 3 wt.%, from about 0.1 wt.% to about 2 wt.%, from about 0.1 wt.% to about 1 wt.%, from about 0.2 wt.% to about 10 wt.%, from about 0. 2 wt.% to about 8 wt.%, from about 0.2 wt.% to about 5 wt.%, from about 0.2 wt.% to about 4 wt.%, from 0.2 wt.% to about 3 wt.%, from about 0.2 wt.% to about 2 wt.%, from about 0.2 wt.% to about 1 wt.%, from about 0.3 wt.% to about 10 wt.%, from about 0. 3 wt.% to about 8 wt.%, from about 0.3 wt.% to about 5 wt.%, from about 0.3 wt.% to about 4 wt.%, from 0.3 wt.% to about 3 wt.%, from about 0.3 wt.% to about 2 wt.%, from about 0.3 wt.% to about 1 wt.%, from about 0.4 wt.% to about 10 wt.%, from about 0. 4 wt.% to about 8 wt.%, from about 0.4 wt.% to about 5 wt.%, from about 0.4 wt.% to about 4 wt.%, from 0.4 wt.% to about 3 wt.%, from about 0.4 wt.% to about 2 wt.%, from about 0.4 wt.% to about 1 wt.%, from about 0.5 wt.% to about 10 wt.%, from about 0.5 wt.% to about 8 wt.%, or from about 0.5 wt.% to about 5 wt.%, from about 0.5 wt.% to about 4 wt.%, from about 0.5 wt.% to about 3 wt.%, or from about 0.5 wt.% to about 2 wt.%, from about 0.5 wt.% to about 1 wt.%.

In various embodiments, the concentration of the non-ionic surfactant component(s) in a concentrate composition ranges from 0.1 wt.% to 10 wt.%, from 0.2 wt.% to 10 wt.%, from 0.3 wt.% to 10 wt.%, from 0.4 wt.% to 10 wt.%, from 0.5 wt.% to 10 wt.%, from 0.1 wt.% to 10 wt.%, from 0. 1 wt.% to 8 wt.%, from 0.1 wt.% to 5 wt.%, from 0.1 wt.% to 4 wt.%, from 0.1 wt.% to 3 wt.%, from 0.1 wt.% to 2 wt.%, from 0.1 wt.% to 1 wt.%, from 0.2 wt.% to 10 wt.%, from 0. 2 wt.% to 8 wt.%, from 0.2 wt.% to 5 wt.%, from 0.2 wt.% to 4 wt.%, from 0.2 wt.% to 3 wt.%, from 0.2 wt.% to 2 wt.%, from 0.2 wt.% to 1 wt.%, from 0.3 wt.% to 10 wt.%, from 0. 3 wt.% to 8 wt.%, from 0.3 wt.% to 5 wt.%, from 0.3 wt.% to 4 wt.%, from 0.3 wt.% to 3 wt.%, from 0.3 wt.% to 2 wt.%, from 0.3 wt.% to 1 wt.%, from 0.4 wt.% to 10 wt.%, from 0. 4 wt.% to 8 wt.%, from 0.4 wt.% to 5 wt.%, from 0.4 wt.% to 4 wt.%, from 0.4 wt.% to 3 wt.%, from 0.4 wt.% to 2 wt.%, from 0.4 wt.% to 1 wt.%, from 0.5 wt.% to 10 wt.%, from 0.5 wt.% to 8 wt.%, or from 0.5 wt.% to 5 wt.%, from 0.5 wt.% to 4 wt.%, from 0.5 wt.% to 3 wt.%, or from 0.5 wt.% to 2 wt.%, from 0.5 wt.% to 1 wt.%.

### Other Components

The composition may further comprise other components such as antifreeze agents and antifoam agents. Examples of antifreeze agents include alcohols such as ethylene glycol, propylene glycol, butanediol, pentanediol, mannitol, sorbitol, and glycerol (glycerin). Examples of antifoam agents include organosilicone or silicone-free compounds such as Break-Thru OE441 (available from Evonik), Break-Thru AF9905 (available from Evonik), AGNIQUE DF 6889 (available from Cognis), AGNIQUE DFM 111S (available from Cognis), BYK-016 (available from BYK), FG-10 antifoam emulsion (available from Dow Corning), 1520-US (available from Dow Corning), 1510-US (available from Dow Corning), SAG 1538 (available from Momentive), and SAG 1572 (available from Momentive)..

The composition may further comprise one or more preservatives e.g., biocides, which term is to include compounds active to prevent decomposition of the composition during storage. Suitable biocide compounds are again known in the art and include bactericides such as Proxel® and Nipacide®.

In various embodiments, the composition may further comprise one or more N-substituted or unsubstituted pyrrolidone compounds that may further enhance the storage stability of the compositions, particularly at low temperatures. In some embodiments, the compositions comprise a N-alkylpyrrolidone (e.g., N-(C₁-C₆)alkyl-2-pyrrolidone). In certain embodiments, the N-alkylpyrrolidone is selected from the group consisting of N-methyl-2-pyrrolidone, N-butyl-2-pyrrolidone, and mixtures thereof.

### Methods of Application

Further aspects are directed to methods of protecting the roots of a plant against damage by a nematode. The methods generally comprise applying the agrochemical composition or an application mixture thereof to soil of a growing area (e.g., the root zone of a plant).

The agrochemical composition can be mixed or diluted with other components as necessary, for example, to attain the desired nematicide compound loading and/or for the purpose of applying the other components (e.g., other active ingredients or fertilizers) at the same time. The agrochemical composition or application mixture thereof can be directly applied to soil in a so-called soil application. Soil applications are for example in-furrow application, drip-and-drench application, chemigation, in particular in hydroponic or/mineral systems, irrigation. The rates used for the agrochemical composition for soil application may require 0.5 to 20 kg, typically from 1 to 10 kg (for example, 2, 4 or 6 kg) of the 3,5-disubstituted-1,2,4-oxadiazole active or salt therof per hectare on a broadcast basis (rate per treated area if broadcast or banded).

The plant protected against damage by nematodes can comprise corn, soybean, cotton, or a combination thereof. In some embodiments, one or more plants are selected from Amaranthaceae (e.g., chard, spinach, sugar beet, and quinoa); Amaryllidaceae (e.g., chives, bulb onion, garlic, green onion, leeks, and shallot); Apiaceae (e.g., anise, caraway, carrot, celery, chervil, coriander, cumin, dill, fennel, parsley, and parsnip); Asparagaceae (e.g., agave and asparagus); Asteraceae (e.g., artichoke, asters, chamomile, chicory, chrysanthemums, dahlias, daisies, echinacea, goldenrod, guayule, lettuce, marigolds, safflower, sunflowers, and zinnias); Brassicaceae (e.g., arugula, broccoli, bok choy, Brussels sprouts, cabbage, cauliflower, canola, collard greens, daikon, garden cress, horseradish, kale, mustard, radish, rapeseed, rutabaga, turnip, wasabi, watercress, and *Arabidopsis thaliana*); Bromeliaceae (e.g., pineapple), Convolvulaceae (e.g., morning glory and sweet potato); Cucurbitaceae (e.g., cantaloupe, cucumber, honeydew, melon, pumpkin, watermelon, zucchini, and squash such as acorn squash, butternut squash, and summer squash); Fabaceae (e.g., alfalfa, beans, carob, clover, guar, lentils, mesquite, peas, peanuts, soybeans, tamarind, tragacanth, and vetch); Malvaceae (e.g., cacao, cotton, durian, hibiscus, kenaf, kola, and okra); Musaceae (e.g., banana and plantain); Poaceae (e.g., bamboo, barley, corn, fonio, millet, oats, ornamental grasses, rice, rye, sorghum, sugar cane, triticale, wheat, and lawn grasses such as Bahia grass, Bermudagrass, bluegrass, Buffalograss, Centipede grass, Fescue, or Zoysia); Polygonaceae (e.g., buckwheat); Rosaceae (e.g., almonds, apples, apricots, blackberry, blueberry, cherries, peaches, plums, quinces, raspberries, roses, and strawberries); Rubiaceae (e.g., coffee); Solanaceae (e.g., bell peppers, chili peppers, eggplant, petunia, potato, tobacco, and tomato); Vitaceae (e.g., grape), and combinations thereof.

In various embodiment, the plant protected against damage by nematode comprises at least one species selected from the group consisting of chard, spinach, chives, bulb onion, garlic, green onion, leeks, and shallot, fennel, parsnip, asparagus, lettuce, arugula, broccoli, bok choy, Brussels sprouts, cabbage, cauliflower, collard greens, daikon, garden cress, horseradish, kale, mustard, radish, rutabaga, turnip, wasabi, watercress, sweet potato, cucumber, honeydew, melon, pumpkin, watermelon, zucchini, and squash such as acorn squash, butternut squash, and summer squash, broad bean, kenya bean, runner bean, mung bean, chick pea, broad bean, lima bean, common bean, green bean, pinto bean, black bean, lentil, carob, peas, cotton, okra, plantain, buckwheat, bell peppers, chili peppers, eggplant, potato, and tomato, and combinations thereof.

### Methods of Preparation

Other aspects include methods of preparing the granular agrochemical compositions described herein. Various methods for preparing the granular agrochemical compositions include mixing a precursor composition comprising the agrochemical component comprising the 3,5-disubstituted-1,2,4-oxadiazole or salt thereof, in particular tioxazafen, with the particulate carrier to absorb, bind, adhere or to be coated to at least a portion of the 3,5-disubstituted-1,2,4-oxadiazole or salt thereof, in particular tioxazafen, and forming the agrochemical composition.

In certain embodiments, the precursor composition further comprises an organic solvent selected from the group consisting of aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, alcohols such as butanol or glycol and their ethers and esters, ketones such as acetone, methyl ethyl ketone, methyl isobutyl ketone or cyclohexanone, amides like fatty acid dimethylamides, strongly polar solvents such as dimethylformamide and dimethyl sulphoxide. Tradename are ISOPAR-M (a hydrocarbon fractionated from petroleum from Exxon Mobile). AGNIQUE AMD 810 (Cognis is a C8-C10 fatty acid dimethylamides). The method can further comprise mixing an organic solvent with the agrochemical component comprising the 3,5-disubstituted-1,2,4-oxadiazole or salt thereof, in particular tioxazafen, to form the precursor composition. Depending on the compositions, other components including an anionic surfactant component or nonionic surfactant component may also be added. In some embodiments, the components are heated during mixing.

The method can further comprise removing the organic solvent after mixing the precursor composition with the particulate carrier.

The precursor composition can be an emulsifiable concentrate. Alternatively, the precursor composition can be a suspension concentrate.

### Definitions

Unless otherwise indicated, an alkyl group as described herein alone or as part of another group is an optionally substituted linear saturated monovalent hydrocarbon substituent containing from one to sixty carbon atoms and preferably one to thirty carbon atoms in the main chain or eight to thirty carbon atoms in the main chain, or an optionally substituted branched saturated monovalent hydrocarbon substituent containing from three to sixty carbon atoms, and preferably eight to thirty carbon atoms in the main chain. Examples of unsubstituted alkyl groups include methyl, ethyl, n-propyl, i-propyl, n-butyl, i-butyl, s-butyl, t-butyl, n-pentyl, i-pentyl, s-pentyl, t-pentyl, and the like.

The term "aryl" as used herein alone or as part of another group (e.g., arylalkyl) denotes optionally substituted homocyclic aromatic groups, preferably monocyclic or bicyclic groups containing from 6 to 12 carbons in the ring portion, such as phenyl, biphenyl, naphthyl, substituted phenyl, substituted biphenyl or substituted naphthyl. Phenyl and substituted phenyl are the more preferred aryl groups. The term "aryl" also includes heteroaryl.

The term "substituted" as in "substituted aryl," "substituted "alkyl," and the like, means that the group in question (i.e., the alkyl, aryl or other group that follows the term), at least one hydrogen atom bound to a carbon atom is replaced with one or more substituent groups such as hydroxy (-OH), alkylthio, phosphino, amido (-CON(R_{A})(R_{B})), wherein R_{A} and R_{B} are independently hydrogen, alkyl, or aryl), amino (-N(R_{A})(R_{B})), wherein R_{A} and R_{B} are independently hydrogen, alkyl, or aryl), halo (fluoro, chloro, bromo, or iodo), silyl, nitro (-NO₂), an ether (-OR_{A} wherein R_{A} is alkyl or aryl), an ester (-OC(O)R_{A} wherein R_{A} is alkyl or aryl), keto (-C(O)R_{A} wherein R_{A} is alkyl or aryl), heterocyclo, and the like. When the term "substituted" introduces a list of possible substituted groups, it is intended that the term apply to every member of that group. That is, the phrase "optionally substituted alkyl or aryl" is to be interpreted as "optionally substituted alkyl or optionally substituted aryl."

The term "heterocyclo" or "heterocycle" as used herein refers to a monocyclic, bicyclic, or tricyclci group containing from 1 to 4 heteroatoms selected from N, O, S(O)ₙ, P(O)ₙ, PR^{Z}, NH, or NR^{Z}, wherein R^{Z} is a suitable substituent. Heterocyclic groups optionally contain one or two double bonds. Heterocyclic groups include, but are not limited to, azetidinyl, tetrahydrofuranyl, imidazolidinyl, pyrrolidinyl, piperidinyl, piperazinyl, oxazolidinyl, thiazolidinyl, pyrazolidinyl, thiomorpholinyl, tetrahydrothiazinyl, tetrahydrothiadiazinyl, morpholinyl, oxetanyl, tetrahydrodiazinyl, oxazinyl, oxathiazinyl, indolinyl, isoindolinyl, quinuclidinyl, chromanyl, isocrhamnyl, and benzoxazinyl. Examples of monocyclic saturated or partially saturated ring systems are tetrahydrofuran-2-yl, tetrahydrofuran-3-yl, imidazolidin-1-yl, imidazolidin-2-yl, imidazolidin-4-yl, pyrrolidin-1-yl, pyrrolidin-2-yl, pyrrolidin-3-yl, piperidin-1-yl, piperidin-2-yl, piperidin-3-yl, piperazin-1-yl, piperazin-2-yl, piperazin-3-yl, 1,3-oxazolidin-3-yl, isothiazolidine, 1,3,-thiazolidin-3-yl, 1,2-pyrazolidin-2-yl, 1,3,-pyrazolidin-1-yl, thiomorpholinyl, 1,2-tetrahydrothiazin-2-yl, 1,3-tetrahydrothiazin-3-yl, tetrahydrothiadiazinyl, morpholinyl, 1,2-tetrahydrodiazin-2-yl, 1,3-tetrahydrodiazin-1-yl, 1,4-oxazin-2-yl, and 1,2,5-oxathiazin-4-yl. Heterocyclic groups can be unsubstituted or substituted by one or more suitable substituents, preferably 1 to 3 suitable substituents, as defined above.

The term "heteroaryl" as used herein alone or as part of another group denotes optionally substituted heterocyclic aromatic groups, preferably monocyclic or bicyclic groups containing from 2 to 12 carbons in the ring portion, such as furanyl, thienyl, pyrrolyl, oxazolyl, thiazolyl, imidazolyl, pyrazolyl, isoxazolyl, isothiazolyl, 1,2,3-oxadiazolyl, 1,2,3-triazolyl, 1,3,4-thiadiazolyl, pyridinyl, pyridazinyl, pyrimidinyl, 1,3,5-triazinyl, and the like.

Having described the invention in detail, it will be apparent that modifications and variations are possible without departing from the scope of the invention defined in the appended claims.

### EXAMPLES

The following non-limiting examples are provided to further illustrate the present invention.

The following examples describe the preparation of granulate compositions of tioxazafen, a broad spectrum nematicide. Tioxazafen was prepared for granulation by dissolving the solid active in an appropriate solvent such as acetone and then loading the solution onto a carrier such as a clay or corn cob grits. Other granule formulations described herein were prepared by loading a suspension concentrate containing tioxazafen onto a carrier through absorption. Finally, formulations are also described loading an emulsion concentrate containing tioxazafen onto a carrier with absorbing ability. Throughout the examples, "a.i." refers to "active ingredient" (e.g., tioxazafen).

**Table 1. Suspension concentrate composition**

| **INGREDIENT** | **Wt. (%)** |
|---|---|
| TIOXAZAFEN, (99.6% a.i.) | 46.06 |
| MORWET D-425 (anionic surfactant) | 2.17 |
| ISOPAR-M (HYDROCARBON SOLVENT) | 2.17 |
| HUMIC ACID, SODIUM SALT | 2.17 |
| PLURONIC L-35 **(non-IONIC SURFACTANT, BLOCK CO-POLYMER)** | 0.05 |
| KH₂PO₄ | 0.01 |
| Na₂HPO₄ | 0.03 |
| XANTHAN GUM | 0.10 |
| ATLOX 4913 (non-ionic surfactant) | 4.00 |
| PROXEL (Preservative) | 0.19 |
| PROPYLENE GLYCOL | 5.43 |
| AGNIQUE DFM 111S (antifreeze agent) | 0.30 |
| Deionized WATER | 37.32 |
| **TOTAL** | 100.00% |

**Table 2. Emulsion concentrate composition**

| **INGREDIENT** | **WT. (%)** |
|---|---|
| TIOXAZAFEN, (99.6% a.i.) | 10.000 |
| AGNIQUE AMD 810 (C8-10 FATTY ACID DIMETHYLAMIDE, solvent) | 66.800 |
| AGNIQUE ME 181 (methyl oleate: emulsifier) | 16.700 |
| TWEEN 20 **((Polysorbate 20, non-ionic surfactant)** | 1.875 |
| ETOCAS 10 -LQ (castor oil, nonionic surfactant) | 0.375 |
| ETOCAS 40-SS (castor oil, nonionic surfactant) | 1.250 |
| ATLOX 4838B **((Calcium alkylaryl sulphonate in 2-ethylhexanol, anionic surfactant)** | 1.000 |
| ATLAS G5002L **(Butyl Block Copolymer;** nonionic surfactant) | 2.000 |
| **TOTAL** | 100.000 |

### Example 1:

Approximately 20 g of corncob grits (particular carrier) were added to a suitable jar, followed by adding 3.5 g of a suspension concentrate containing tioxazafen to the carrier dropwise while mixing. After all liquid was added, the mixture was mixed for 1-2 hrs with a jar roller. Then the jar was placed in a vacuum oven to remove volatile content. The loading of a.i. in the mixture was 6.27 wt.% tioxazafen per assay results.

### Example 2:

Approximately 30 g of clay particles (Micro-Sorb 16/30 LVM, BASF) were added into a suitable container, followed by adding a pre-diluted suspension concentrate containing tioxazafen to the carrier as dropwise while mixing. After all liquid was added, mixing continued for about 1-2 hours with a jar roller. Afterwards, mixing stopped and the jar was placed in a vacuum oven to remove all volatile content. The loading of a.i. in the dried granule was 6.6 wt.% tioxazafen per assay results. The formulation composition is listed in Table 3.

**Table 3. Formulation composition**

| **INGREDIENT** | **WT. (%)** |
|---|---|
| MICROSORB 16/30 LVM | 90.541 |
| TIOXAZAFEN, (99.6% AI) | 6.951 |
| MORWET D-425 (SODIUM SALT OF ALKYL NAPHTHALENE SULFONATE CONDENSATE; **ANIONIC SURFACTANT)** | 0.327 |
| ISOPAR-M (HYDROCARBON SOLVENT) | 0.327 |
| HUMIC ACID SODIUM SALT | 0.327 |
| PLURONIC L-35 (NON-IONIC SURFACTANT, BLOCK CO-POLYMER) | 0.008 |
| KH₂PO₄ | 0.002 |
| NA₂HPO₄ | 0.005 |
| XANTHAN GUM | 0.015 |
| ATLOX 4913 (NON-IONIC SURFACTANT, ACRYLIC COPOLYMER) | 0.604 |
| PROXEL (PRESERVATIVE) | 0.029 |
| PROPYLENE GLYCOL | 0.819 |
| ANTIFOAM | 0.045 |
| TOTAL | 100 |

### Example 3:

Approximately 20 g corncob grits were added into a suitable jar, followed by adding about 2.9 g of a suspension concentrate containing tioxazafen dropwise onto corncob grits while mixing. After all liquid was added, mixing continued for 1-2 hrs with a jar roller until a homogeneous mixture was obtained. Tioxazafen in the mixture was assayed at 5.48 wt.%.

### Example 4:

BASF Micro-Sorb 300-LVM Magnesium Aluminum Silicate clay was used as carrier in the example. Tioxazafen was first dissolved in acetone at 12% wt. Then 10 g of the solution was loaded onto 20 g of clay carrier under agitation. After all liquid was added, mixing continued for 1-2 hrs with ajar roller till all liquid was absorbed. Then the jar was placed in a vacuum oven to remove solvent. The obtained mixture contains about 5.7 wt.% tioxazafen.

### Example 5:

BASF Micro-Sorb 30/60 LVM Magnesium Aluminum Silicate clay was used as carrier in the example. 400 g of clay particles (Micro-Sorb 30/60 LVM, BASF) were added into the stainless bowl of Hobart mixer, and mixed at low speed, before a pre-diluted tioxazafen mixture was pumped on top of the carrier dropwise while mixing. After all liquid was added, mixing continued for 10 mins. A homogeneous mixture was obtained. The formulation composition is listed in Table 4. About 150 g of the wet granules were dried in a vacuum oven to remove the moisture. The dry granule contains about 3.68 wt.% tioxazafen per assay results. Bentonite clay (Agro-Sorb 30/60 RVM) was also evaluated in a similar manner.

**Table 4. Formulation composition of a 4% tioxazafen granule**

| **INGREDIENT** | **WT. %** |
|---|---|
| MICROSORB 30/60 LVM | 74.074 |
| H₂O | 20.509 |
| TIOXAZAFEN, (99.6% AI) | 3.980 |
| MORWET D-425 A SODIUM SALT OF ALKYL NAPHTHALENE SULFONATE CONDENSATE, **ANIONIC SURFACTANT)** | 0.188 |
| ISOPAR-M (SOLVENT) | 0.188 |
| HUMIC ACID SODIUM SALT | 0.188 |
| PLURONIC L-35 (NON-IONIC SURFACTANT, BLOCK CO-POLYMER) | 0.004 |
| KH2PO4 | 0.001 |
| NA₂HPO₄ | 0.003 |
| XANTHAN GUM | 0.009 |
| ATLOX 4913 (NON-IONIC SURFACTANT, ACRYLIC COPOLYMER) | 0.346 |
| PROXEL (PRESERVATIVE) | 0.016 |
| PROPYLENE GLYCOL | 0.469 |
| ANTIFOAM | 0.026 |
| TOTAL = | 100 |

### Example 6:

BASF Micro-Sorb 30/60 LVM Magnesium Aluminum Silicate clay was used as carrier in the example. 400 g of clay particles (Micro-Sorb 30/60 LVM, BASF) were added into the stainless bowl of Hobart mixer and mixed at low speed before a pre-diluted suspension concentrate containing tioxazafen was pumped on top of the carrier as dropwise while mixing. After all the liquid was added, mixing continued for 10 mins. A homogeneous mixture was obtained. The loading of tioxazafen in the granule is 3.965% wt. per assay results. The formulation composition is listed in Table 5.

**Table 5. Formulation composition of a granule with 4% loading.**

| **INGREDIENT** | **WT. %** |
|---|---|
| MICROSORB 30/60 LVM | 74.074 |
| DEIONIZED WATER | 20.931 |
| TIOXAZAFEN | 3.965 |
| SOPROPHOR 4D 384 (ANIONIC SURFACTANT, TRISTYRYPHENOL ETHOXYLATE SULFATE) | 0.432 |
| PROPYLENE GLYCOL | 0.432 |
| AGNIQUE DFM 111, ANTIFOAM | 0.065 |
| **SOKALAN VA 64 (DISPERSANT, POLYVINYLPYRROLIDONE-VINYL ACETATE COPOLYMER)** | 0.086 |
| XANTHAN GUM | 0.014 |
| TOTAL = | 100 |

### Example 7:

Approximately 50 g of attapulgite (MicroSorb 30/60 LVM) were added to a suitable jar, followed by the addition of 22 g of an emulsified concentrate containing tioxazafen was addied dropwise onto the clay particles while mixing. After all liquid was added, mixing continued for 1-2 hrs with a jar roller till a homogeneous mixture was achieved. The loading of tioxazafen in the mixture was 3.1 wt.% per assay results. The formulation composition is listed in Table 6.

**Table 6: 3% Tioxazafen granule made with tioxazafen emulsified concentrate onto attapulgite**

| **INGREDIENT** | **WT. %** |
|---|---|
| TIOXAZAFEN | 3.1 |
| AGNIQUE AMD 810 (C8-10 FATTY ACID DIMETHYLAMIDE; SOLVENT) | 20.4 |
| **AGNIQUE ME 181 (C18 METHYL OLEATE; EMULSIFIER)** | 5.1 |
| TWEEN 20 | 0.6 |
| (POLYSORBATE 20, NON-IONIC SURFACTANT) | |
| ETOCAS 10 -LQ (PEG-10 CASTOR OIL, NON-IONIC SURFACTANT) | 0.1 |
| ETOCAS 40-SS (PEG-40 CASTER OIL; NON-IONIC SURFACTANT) | 0.4 |
| ATLOX 4838B (CALCIUM ALKYLARYL SULPHONATE IN 2-ETHYLHEXANOL) | 0.3 |
| ATLAS G5002L (BUTYL BLOCK COPOL YMER; **NONIONIC SURFACTANT)** | 0.6 |
| MICROSORB 30/60 LVM (ATTAPULGITE) | 69.4 |
| TOTAL = | 100.0 |

### Example 8:

Granule formulations containing 1-6% wt. tioxazafen were developed for in-furrow applications. The granular formulations were assessed for green house bioefficacy (e.g., nematode control). Four different granule formulations were included in the study. A wet granule labeled as AS30604GW was made from loading a tioxazafen suspension onto AgSorb 30/60 RVM, a bentonite type of clay carrier as illustrated in Example 5. It resulted in a granule with 23.5% wt water. The wet granule labeled as MS30604GW was made from loading a tioxazafen-containing suspension onto Micro-Sorb 30/60 LVM, an attapulgite type of clay carrier as illustrated in Example 5. It resulted in a granule with 21.5% wt water. Part of the granule was dried to reduce moisture below 4% wt. and were labeled as MS30604GD and AS30604GD. They contained 2.3 and 3.8% wt. water, respectively. The formulations, use rates, location of their application and average cyst number observed in each condition is described in Table 7 below.

**Table 7. Treatment list for SCN efficacy study**

| Treatment No. | Formulation | Location of Chemistry | Use rate (mg/pot) | Average Cyst No. |
|---|---|---|---|---|
| 1 | Granular (AS30604GW) | Top | 0.5 | 34.5 |
| 2 | Granular (AS30604GD) | Top | 0.5 | 63.0 |
| 3 | Granular (MS30604GW) | Top | 0.5 | 30.0 |
| 4 | Granular (MS30604GD) | Top | 0.5 | 89.2 |
| 5 | Granular (AS30604GW) | Top | 2 | 7.0 |
| 6 | Granular (AS30604GD) | Top | 2 | 6.3 |
| 7 | Granular (MS30604GW) | Top | 2 | 1.7 |
| 8 | Granular (MS30604GD) | Top | 2 | 5.8 |
| 9 | Granular (AS30604GW) | Top | 4 | 2.5 |
| **10** | Granular (AS30604GD) | Top | 4 | 2.6 |
| **11** | Granular (MS30604GW) | Top | 4 | 3.0 |
| **12** | Granular (MS30604GD) | Top | 4 | 2.7 |
| **13** | Untreated Control | N/A | N/A | 275.3 |

All four granule formulations showed good nematode control at the 3 use rates: 0.5, 2 and 4 mg. Interestingly, the two wet granules showed better nematode control than the dried granules when used at 0.5 mg. The results indicate a better nematode control with wet granules at low use rate which might relate to an improved delivery of the active ingredient to the root zone with wet granules.

### Example 9:

Different granule formulations were prepared using different carriers (with and without water) and analyzed for crystal formation, release and efficacy. Results are shown in Table 8, below.

**Table 8: Release and Efficacy of Different Granule Formulations**

| **Carrier** | **Formulation with H₂O** | **w.o./H₂O** |
|---|---|---|
| **Corn Cob Grit** | Tioxazafen crystals form; release and efficacy not measured | Tioxazafen crystals form; poor release but good efficacy |
| **Bentonite Clay** | No Tioxazafen crystals form; good release & good efficacy | No Tioxazafen crystals form; poor release but good efficacy |
| **Attapulgite Clay** | No Tioxazafen crystals form; good release & good efficacy | No Tioxazafen crystals form; poor release but good efficacy |

### Example 10:

Granule formulations containing 0.8-5% wt. a.i. (tioxazafen) were prepared and assessed for soil penetration. Six different granule formulations (replicated once) were included in the study.

The wet granules were prepared as in Examples 5 and 6. The applied a.i. concentrations, precursor compositions, and particulate carriers are shown in Table 9, below.

**Table 9**

| **Formulation** | **Tioxazafen (% wt)** | **Precursor** | **Carrier** | **Carrier Trade name** |
|---|---|---|---|---|
| 5G_Clay_W | 5 | Suspension Concentrate | Attapulgite | MicroSorb 30/60 LVM |
| 5G_Clay_W | 5 | Suspension Concentrate | Attapulgite | MicroSorb 30/60 LVM |
| 2.5G_Clay_EC | 2.5 | Emulsion Concentrate | Attapulgite | MicroSorb 30/60 LVM |
| 2.5G_Clay_EC | 2.5 | Emulsion Concentrate | Attapulgite | MicroSorb 30/60 LVM |
| 5G_CCG_NSC_ _ W | 5 | Suspension Concentrate | Corn Cob Grit | Corn Cob Grit 20/40 |
| 5G_CCG_NSC_ _ W | 5 | Suspension Concentrate | Corn Cob Grit | Corn Cob Grit 20/40 |
| 1G_CCG_EC | 1 | Emulsion Concentrate | Corn Cob Grit | Corn Cob Grit 20/40 |
| 1G_CCG_EC | 1 | Emulsion Concentrate | Corn Cob Grit | Corn Cob Grit 20/40 |
| 1G_CCG_10SD | 1 | Solution | Corn Cob Grit | Corn Cob Grit 20/40 |
| 1G_CCG_10SD | 1 | Solution | Corn Cob Grit | Corn Cob Grit 20/40 |
| 0.8%_DGL_EC | 0.8 | Emulsion Concentrate | Water Dispersible Granule | DG Lite 100 (The Andersons Plant Nutrient Group) |
| 0.8%_DGL_EC | 0.8 | Emulsion Concentrate | Water Dispersible Granule | DG Lite 100 (The Andersons Plant Nutrient Group) |

The wet granules were evaluated for their ability to deliver the active deep into a soil layer. A soil elution column was prepared utilizing a 60 mL syringe body. Three layers of Whatman filter paper (Cat# 1001090) were placed in the bottom of the syringe; followed by 35 grams of soil. The column was wetted with approximately 40 grams of water, discarding any eluted water. A sample of the granular formulation was placed on the soil column, followed by approximately 10 grams of sand. Approximately 20 grams of water was added to the column and the eluent was collected. The eluent was analyzed via LC-MS to determine the amount of tioxazafen a.i. released. The concentration of tioxazafen released for each formulation is shown in Table 10 below.

**Table 10**

| **Formulation** | **Concentration of Released Tioxazafen in Eluent (% wt)** |
|---|---|
| 5G_Clay_W | 0.08 |
| 5G_Clay_W | 0.07 |
| 2.5G_Clay_EC | 0.10 |
| 2.5G_Clay_EC | 0.11 |
| 5G_CCG_NSC_ W | 0.32 |
| 5G_CCG_NSC_ W | 0.74 |
| 1G_CCG_EC | 9.03 |
| 1G_CCG_EC | 9.44 |
| 1G_CCG_10SD | <0.05 |
| 1G_CCG_10SD | <0.05 |
| 0.8%_DGL_EC | 6.05 |
| 0.8%_DGL_EC | 1.28 |

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products and methods without departing from the scope of the invention, it is intended that all matter contained in the above description shall be interpreted as illustrative and not in a limiting sense.

## Claims

1. An agrochemical composition, the composition comprising:
an agrochemical component comprising a 3,5-disubstituted-1,2,4-oxadiazole or a salt thereof;
a particulate carrier, ; and
water, wherein the water content of the composition is from about 2 wt.% to about 25 wt.%.

2. The composition of claim 1 wherein the particulate carrier comprises at least one material selected from the group consisting of organic carrier, clay materials, and fumed and precipitated silica and combinations thereof.

3. The composition of claim 1 or 2, wherein the particulate carrier comprises a clay material.

4. The composition of any one of claim 1 to 3 wherein the clay material is selected from the group of magnesium-aluminum silicate clay material consisting of bentonite, sepeolite, attapulgite, laponite, hectorite. halloysite, kaolinite, illite, montmorillonite, vermiculite, talc, sepiolite, palygorskite (or attapulgite), and pyrophyllite.

5. The composition of any one of claims 1 to 4, wherein the magnesium-aluminum silicate clay material is selected from the group consisting of attapulgite, bentonite, and montmorillonite.

6. The composition of any one of claims 1 or 2, wherein the particulate carrier comprises one or more organic carrier selected from the group of sawdust, paper, coconut shells, corn cob particles, corn cob grits, and tobacco stalks.

7. The composition of any one of claims 1,2 or 6, wherein the particulate carrier comprises one or more organic carrier selected from the group of corn cob particles or corn cob grits.

8. The composition of any one of claims 1 to 7 wherein the 3,5-disubstituted-1,2,4-oxadiazole or a salt thereof comprises the compound of Formula Ia-I (Tioxazafen):

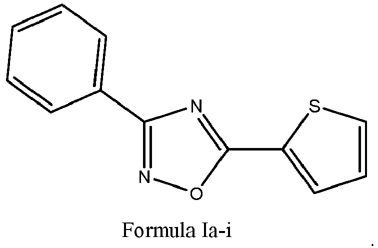

9. The composition of any one of claims 1 to 8 wherein the concentration of the 3,5-disubstituted-1,2,4-oxadiazole or a salt thereof is between about 1 wt.% to about 10 %, between about 1 wt.% to about 8%, between about 1 wt.% to about 6 %, between about 1 wt.% to about 5 %, between about 1 wt.% to about 4 %.

10. The composition of any one of claims 1 to 9 wherein the water content of the composition is from about 5 wt.% to about 25 wt.%.

11. The composition of any one of claims 1 to 9 wherein the water content of the composition is from about 20 wt.% to about 25 wt.%.

12. The composition of any one of claims 1 to 11 further comprising a surfactant component.

13. The composition of claim 12 wherein the surfactant component comprises at least one surfactant selected from the group consisting of anionic surfactants and non-ionic surfactants.

14. The composition of claim 12 or 13 wherein the surfactant component comprises an anionic surfactant is selected from the group consisting of alkyl sulfates, alcohol sulfates, alcohol ether sulfates, alpha olefin sulfonates, alkylaryl ether sulfates, arylsulfonates, alkylsulfonates, alkylaryl sulfonates, sulfosuccinates, mono- or diphosphate esters of polyalkoxylated alkyl alcohols or alkyl phenols, mono- or disulfosuccinate esters of alcohols or polyalkoxylated alkanols, alcohol ether carboxylates, phenol ether carboxylates, and combinations thereof.

15. The composition of any one of claims 12 to 14 wherein the surfactant component comprises an anionic surfactant selected from thr group consisting of arylsulfonates, alkylsulfonates, alkylaryl sulfonates, and combinations thereof.

16. The composition of any one of claims 12 to 14 wherein the surfactant component comprises a nonionic surfactant selected from the group consisting of alkoxylated fatty oils, sorbitan esters, ethoxylated sorbitan esters, alkoxylated alkylphenols, alkoxylated alcohols, polyalkylene oxide block copolymers, lanolin derivatives, and combinations thereof.

17. The composition of any one of claims 12 to 16 wherein the surfactant component comprises a polyalkylene oxide block copolymer.

18. The composition of any one of claims 12 to 17 wherein the surfactant component comprises at least one anionic surfactant and at least one nonionic surfactant.

19. The composition of any one of claims 1 to 18 further comprising a second agrochemical component selected from the group consisting of nematicides, insecticides, fungicides, herbicides, biological control agents, plant nutrients, and combinations thereof.

20. A method for protecting the roots of a plant against damage by a nematode, the method comprising applying the agrochemical composition of any of claims 1 to 19 or an application mixture thereof to soil of a growing area.

21. The method of claim 20 wherein the plant is selected from the group consisting of Amaranthaceae (e.g., chard, spinach, sugar beet, and quinoa); Amaryllidaceae (e.g., chives, bulb onion, garlic, green onion, leeks, and shallot); Apiaceae (e.g., anise, caraway, carrot, celery, chervil, coriander, cumin, dill, fennel, parsley, and parsnip); Asparagaceae (e.g., agave and asparagus); Asteraceae (e.g., artichoke, asters, chamomile, chicory, chrysanthemums, dahlias, daisies, echinacea, goldenrod, guayule, lettuce, marigolds, safflower, sunflowers, and zinnias); Brassicaceae (e.g., arugula, broccoli, bok choy, Brussels sprouts, cabbage, cauliflower, canola, collard greens, corn, cotton, daikon, garden cress, horseradish, kale, mustard, radish, rapeseed, rutabaga, turnip, wasabi, watercress, and *Arabidopsis thaliana*); Bromeliaceae (e.g., pineapple), Convolvulaceae (e.g., morning glory and sweet potato); Cucurbitaceae (e.g., cantaloupe, cucumber, honeydew, melon, pumpkin, watermelon, zucchini, and squash such as acorn squash, butternut squash, and summer squash); Fabaceae (e.g., alfalfa, beans, carob, clover, guar, lentils, mesquite, peas, peanuts, soybeans, tamarind, tragacanth, and vetch); Malvaceae (e.g., cacao, cotton, durian, hibiscus, kenaf, kola, and okra); Musaceae (e.g., banana and plantain); Poaceae (e.g., bamboo, barley, corn, fonio, millet, oats, ornamental grasses, rice, rye, sorghum, sugar cane, triticale, wheat, and lawn grasses such as Bahia grass, Bermudagrass, bluegrass, Buffalograss, Centipede grass, Fescue, or Zoysia); Polygonaceae (e.g., buckwheat); Rosaceae (e.g., almonds, apples, apricots, blackberry, blueberry, cherries, peaches, plums, quinces, raspberries, roses, and strawberries); Rubiaceae (e.g., coffee); Solanaceae (e.g., bell peppers, chili peppers, eggplant, petunia, potato, tobacco, and tomato); Vitaceae (e.g., grape), and combinations thereof.

22. The method of claim 21 wherein the plant comprises corn, soybean, and/or cotton.

23. The method of any one of claims 20 to 22 wherein the application mixture is applied as a soil application such as in-furrow application, drip-and-drench application, chemigation.

24. A process of preparing the agrochemical composition of any of claims 1 to 19, the process comprising:
mixing a precursor composition comprising the agrochemical component comprising the 3,5-disubstituted-1,2,4-oxadiazole or a salt thereof with the particulate carrier to absorb at least a portion of the 3,5-disubstituted-1,2,4-oxadiazole or a salt thereof on the particular carrier and form the agrochemical composition.

25. The process of claim 24 wherein the precursor composition further comprises an organic solvent.

26. The process of claim 25 wherein the organic solvent comprises acetone.

27. The process of claim 25 or 26 further comprising removing the organic solvent after mixing the precursor composition with the particulate carrier.

28. The process of any one of claims 24 to 27 wherein the precursor composition is an emulsifiable concentrate.

29. The process of claim 24 to 27 wherein the precursor composition is a suspension concentrate.
